# EUROPÄISCHE PATENTSCHRIFT

(11) **EP 3 985 466 B1**
(45) Veröffentlichungstag und Bekanntmachung des Hinweises auf die Patenterteilung: **21.02.2024**
(21) Anmeldenummer: 21202582.9
(22) Anmeldetag: 14.10.2021
(51) Int. Cl.: G05B 19/418, G05B 23/02, B22D 47/00

(54) **ANLAGE DER HÜTTENINDUSTRIE UND VERFAHREN ZUM BETREIBEN EINER ANLAGE DER HÜTTENINDUSTRIE**
METALLURGICAL PLANT AND METHOD FOR OPERATING A METALLURGICAL PLANT
INSTALLATION DE L'INDUSTRIE MÉTALLURGIQUE ET PROCÉDÉ DE FONCTIONNEMENT D'UNE INSTALLATION DE L'INDUSTRIE MÉTALLURGIQUE

(30) Priorität: 16.10.2020 BY 20200285
(43) Veröffentlichungstag der Anmeldung: 20.04.2022
(73) Patentinhaber: SMS Group GmbH, 40237 Düsseldorf (DE)
(72) Erfinder: Gorainov, Sergey, verstorben (DE); Plociennik, Christian, 40878 Ratingen (DE); Tischner, Christoph, 42579 Heiligenhaus (DE); Reifferscheid, Markus, 41352 Korschenbroich (DE)
(74) Vertreter: Klüppel, Walter

(56) Entgegenhaltungen:
- EP-A1- 3 167 975

## Beschreibung

Die Erfindung betrifft eine Anlage der Hüttenindustrie und ein Verfahren zum Betreiben einer Anlage der Hüttenindustrie.

Die Anlage der Hüttenindustrie ist beispielsweise eine Anlage der metallerzeugenden Industrie, der Nicht-Eisen- (NE) oder Stahlindustrie oder der Vorlegierungsherstellung. Beispiele für derartige industrielle Anlagen sind Hochöfen, Direktreduktionsanlagen, Lichtbogenöfen, Konverter oder Anlagen für Pfannenprozesse, Anlagen zum Ur- oder Umformen von Metallen wie beispielsweise Strang- oder Knüppelgießanlagen und Warm- und/oder Kaltwalzanlagen, oder diesen Anlagen vor- oder nachgelagerte Anlagen wie beispielsweise Ofen, z. B. Wiedererwärmungs- oder Halteöfen, Adjustageeinrichtungen, Beschichtungslinien, Kühlstrecken, Beizen oder Glühen.

Die Anlage der Hüttenindustrie umfasst mehrere Aggregate, die bei normalem Anlagenbetrieb infolge regulären Verschleißes regelmäßig und planmäßig gewechselt werden müssen. Beispiele für derartige Aggregate einer Anlage der Hüttenindustrie sind Kokillen, Verteilergefäße, Segmente und Walzen. Der Lebenszyklus solcher Aggregate der Anlage betrifft verallgemeinert folgende Stadien: Produktionseinsatz in der Anlage, Reparatur in der Werkstatt, De-/Installation, Lager, Transport zwischen dem Produktionseinsatz der Anlage und der Werkstatt.

Als Anwendungsbeispiel kann die Verwaltung von wechselbaren Segmenten einer Stranggießanlage genommen werden. In Stranggießanlagen sind meist mehrere Rollen in schnellwechselbaren Einheiten, sogenannten Segmenten, zusammengefasst. Solche Segmente bestehen im Wesentlichen aus einem Ober- und einem Unterrahmen mit eingeschweißten Traversen, auf denen die Stütz- und Führungsrollen angeordnet sind. Die Segmente werden bei normalem Anlagenbetrieb infolge regulären Verschleißes regelmäßig und planmäßig gewechselt.

Nach dem Segmentwechsel müssen alle in der Strangführung eingebauten Segmente und deren Stützrollen an den Los- und Festseiten der Strangführung möglichst fehlerfrei angestellt werden. Dabei müssen sowohl die Ausrichtung der Stranghinterkante, als auch die Maulweiten sowie die Rollengängigkeit und Spritzwasserbeaufschlagung der Sprühdüsen berücksichtigt werden. Je nach Segmentposition in der Stranggießanlage werden Segmente in unterschiedlichen Zeitintervallen gewechselt und zu Reparaturzwecken in die Werkstatt transportiert.

Für die Instandhaltung des Segmentes sind folgende Stationen des Segmentumlaufs zu beschreiben:
Werkstatt: Reparatur und Kalibrierung. Die Anstellung der Rollen im oberen und unteren Segmentrahmen wird in der Werkstatt geprüft und korrigiert, die damit erzielten Werte werden für jeden Segmentrahmen erfasst und in einem Messungsprotokoll zusammengefasst. Nachdem die beiden Segmentrahmen repariert sind, wird das Segment zusammengebaut und schließlich kalibriert. Dabei werden die obere und untere Segmentrahmen auf eine bestimmte Maulweite aufeinander gefahren, um die Werte von den Zylinderweggebern für die eingestellte Maulweite zu erfassen.

Transportwege: Transport zur Stranggießanlage. Nachdem das Segment repariert und kalibriert wurde, darf es wieder in der Anlage eingesetzt werden. Dafür wird es mit dem Zug oder einem anderen Transportmittel wieder zur Stranggießanlage gefahren und auf der Gießbühne abgestellt, um während des nächsten Stillstands gewechselt zu werden.

Gießbühne, Strangführung: Segmentwechsel und Rekalibrierung. Beim Segmentwechsel werden die Segmente auf dem Strangführungsrahmen auf vier Pfosten abgestellt und festmontiert. Je nach Anlagezustand und der Ausrichtung von den benachbarten Segmenten, sollen die Pfostengrößen angepasst werden, damit die beiden Segmentübergänge vorne und hinten von dem eingewechselten Segment minimal werden. Die technologischen Offsets der Zylinderweggeber werden für die dynamische Steuerung der Segments-Maulweiten in den Steuerungs-(SPS-)Modulen eingepflegt.

Leitstand: Inspektion, Gießen, Vorplanung des Segmentwechsels. Die reale Anstellung der Segmente und Rollen in der Strangführung wird vom Roll-Checker-Messgerät direkt in der Stranggießmaschine gemessen. Fehler in der Rolleneinstellung könnten Rissbildung sowohl an den Oberflächen des Strangs, als auch innen, an der flüssig-fest Grenze verursachen. Einige Anlagen verfügen über das direkt im Kaltstrang eingebaute Rollchecker-System, dass dem Leitstandpersonal die Möglichkeit bietet sich beim Angießen die Messergebnisse der gerade durchgeführten Anlagenprüfung anzuschauen. Die wechselnden Gießformate des Stranges (Gießdicke und Gießbreite) haben verschiede Auswirkungen auf den Zustand der Stützrollen und Sprühdüsen in der Stranggießmaschine. Um den großen Umfang verschiedener moderner Stahlgüten fehlerfrei Gießen zu können, werden die Segmente in der Stranggießmaschine ständig gewechselt. Die Segmente aus dem oberen Bogenbereich der Stranggießmaschine werden beispielsweise monatlich gewechselt, während im unteren horizontalen Bereich der Anlage die Segmente einmal in 6 - 12 Monaten gewechselt werden.

Gießmaschine: Störfallbeseitigung (Havarie). Obwohl das Gießen ständig von verschiedenen technologischen Software-Assistenten und Level-1/-2 Automationssystemen überwacht wird, passieren trotzdem Havariefälle in der Anlage, in welchen der Gießprozess angehalten werden muss. Im Falle eines Durchbruchs werden meistens mehrere Segmente der Stranggießmaschine beschädigt und müssen möglichst schnell ausgetauscht werden. Oft bleibt der erstarrte Strang zwischen den Rollen des Segmentes stecken und muss ausgeschnitten werden. Die vorsorgliche Analyse dieser Fälle braucht meistens sehr unterschiedliche Daten und einige Test-Simulationen, um die Ursache eindeutig zu erklären.

An allen oben beschriebenen Arbeitsplätzen und -tätigkeiten im Rahmen der Kokillen- und Segmentwartung werden die Informationen über das Aggregat (Segment oder Kokille), über entdeckte Fehler oder gemeldete Probleme von dem Werkstatt-, Gießbühnen-, Logistikpersonal, sowie vom Bediener im Leitstand der Stranggießanlage benötigt und angefragt. Die Informationen werden bisher an verschiedenen Orten der Stranggießanlage gesammelt und von den unterschiedlichen Informations- und Automationssystemen verarbeitet.

Eine wesentliche Voraussetzung für den ununterbrochenen und vorzugsweise vollautomatischen Betrieb von Anlagen der Hüttenindustrie, wie z. B. von Stranggießanlagen oder Walzstraßen, ist die reibungslose Versorgung der Maschinen mit fehlerfreien Aggregaten, z.B. wechselbaren Segmenten, Kokillen, Walzensets. Die Aggregate müssen nach einer gewissen Standzeit aufgrund vom Verschleiß oder technologischen Anforderungen ausgetauscht werden. Zur Organisation dieser Versorgung sind Informationen über den Zustand sowie über den Aufenthaltsort der Aggregate und deren Wechselteile wesentlich. Es wurden hierzu unterschiedliche Verfahren entwickelt und produktiv eingesetzt.

Nach dem Stand der Technik werden beispielweise für die Inspektion des Zustandes der zuvor beschriebenen Stranggießanlage so genannte Rollchecker-Messgeräte eingesetzt, die diverse Vermessungen des Rollenspaltes, der Rollenfehlstellung, der Rollengängigkeit und der Spritzwasser-Beaufschlagung der Spritzdüsen der in der Strangführung eingebauten Segmente durchführen, in dem sie innerhalb der Strangführung die ganze Maschine in oder entgegen der Gießrichtung durchfahren. Alle Messergebnisse des Rollchecker-Messgerätes werden mit den Rollenpositionen im Strang ausgewertet. Eine Verknüpfung der Messdaten an das Segment oder dessen Segmentumlaufs in der Anlage findet traditionell nicht statt.

In der Werkstatt werden unterschiedliche Vorrichtungen zur Rollenausrichtung des Segmentrahmens benutzt. Jede Vorrichtung sammelt die Daten bezüglich der vom Bediener manuell angegebenen Information über den geprüften Segmentrahmen. Nachdem der obere und untere Rahmen des Segments ausgerichtet ist, wird das Segment zusammengebaut und kalibriert, in dem die technologischen Offsets der Zylinderweggeber für die bestimmte Maulweite gemessen werden. Die Identifizierung des Segments in der Werkstatt oder beim Segmentwechsel auf der Gießbühne erfolgt manuell und/oder visuell. Die weiteren Informationen über den Segmentzustand bleiben bisher für das Personal bei den Service-Arbeiten am Segment unzugänglich.

Der Abstellort jedes einzelnen Segments vor und nach der Reparatur, sowie der Abtransport des Segments zur Stranggießanlage werden bisher nicht erfasst. Der Umlauf des Segments innerhalb der Gießhalle und Werkstatt, sowie die Produktionsdaten (Historie) werden bisher in einem unabhängigen System manuell gepflegt. Die Analyse der Vermessungen in der Werkstatt und in der Strangführung, sowie die Korrektur der eingestellten technologischen Offsets in der Level-1 Automation erfolgen unabhängig voneinander, sodass eine Anfrage über relevante Informationen über den aktuellen Zustand eines bestimmten Segmentes traditionell an die verschiedenen bearbeitenden Stellen weitergeleitet werden muss und nur mit großem Zeitaufwand beantwortet werden kann.

Neuere Ansätze unter Nutzung von Auto ID-Techniken, wie beispielweise von Balkencode (Barcode), DataMatrix-Code (QR-Codes) oder von konventionellen RFID-Techniken ("RFID 1.0" = automatische Identifizieren von Objekten) wurden für die Verwaltung von Werkzeugen und deren Bestandteilen in industriellen Anlagen unter verschiedenen Ansätzen angewendet.

Die Patentmeldung US 2009/0276338 A1 offenbart ein Verfahren für den Informationsaustausch und die Auswahl der Handlungen durch Lokalisierung von physischen Objekten. Während in unabhängigen Systemen zugewiesenen Auto-IDs von einem zentralen Verarbeitungszentrum gehandelt werden, lässt das Verfahren den Nutzer die Auto-ID bezogenen Regeln, Attribute und Bedingungen definieren.

Obwohl das Verfahren auf unterschiedlichen IP-Netzwerken basiert und eine gewisse Modularität durch Erweiterungsmodule zu diversen Informationssystemen zeigt, reichen diese kombinierten Auto-ID-Technologien zur detaillierten momentanen und verfahrenstechnischen Aufzeichnung benötigter Bewegungs- und Instandhaltungsdaten eines Werkzeugs alleine nicht aus.

Hierzu muss eine entsprechende Kommunikation zu und zwischen verschiedenen EDV-gestützten Systemen, wie z. B. Werkzeug-Management-Software (WMS), Produktionsplanung und Steuerung System (PPS), System für Materialbedarfs- und Ressourcenplanung (ERP-System), Supply Chain Management (SCM), Customer Relationschip Management (CRM), Product Lifecycle Management (PLM) und weiteren Daten-Informations-Systemen aufgebaut werden. Die Einbettung von solchen Modulen bedeutet oft den einzigen Weg zur Informationsgewinnung über alle gefragten Eigenschaften eines physischen Objektes.

Permanente Verfügbarkeit dieser Systeme über alle möglichen Standorte aller wechselbaren Aggregate und deren Wechselteile stellt eine besondere - wenn überhaupt erreichbare - Herausforderung bei der Planung und Einrichtung der komplexen IT-Infrastruktur (inkl. Verfügbarkeit von unterschiedlichen Netzwerken mit angeschlossenen Datenbanken und Server) dar. Die Wartungsarbeiten an solchen IT-Systemen sind oft nur in den Stillstandzeiten der Produktionsanlage möglich (z. B. Datenbankupdates oder Schnittstellenänderungen). D. h. für das Wartungspersonal im Shopfloor Bereich steht somit während des Stillstands eine Unterstützung durch die IT-Systeme nicht zur Verfügung.

Qualitative Datenabfragen (z.B. Messergebnisse und technologische Auswertungen der letzten Prüfung des Aggregates) werden bei solchen Lösungen oft durch größere Belastung des IT-Systems verhindert. Änderungen im Datenkontext, Erweiterungen der bestehenden Funktionalitäten oder Skalierung der Anwendung auf neue Produktionsbereiche (Stationen) sind direkt von den Modularität- und Skalierungs-Eigenschaften mehrerer dieser Systeme abhängig und oft ohne Unterstützung und Genehmigung des IT-Systemherstellers nicht mehr möglich.

Solche Systeme weisen einen hohen Einführungsaufwand auf (standardmäßig relativ hoher Investitionsaufwand), mit langer Einführungszeit, und führen häufig auch zu Akzeptanzproblemen der betroffenen Mitarbeiter in der Werkstatt oder Produktion, so dass die Auto-ID Systeme in Kombination mit DV-Lösungen aus wirtschaftlichen und/oder organisatorischen Gründen sich nicht durchgesetzt haben.

Ein weiteres Konzept der lokalen Realisierung der Inspektions-, Ausfallvermeidung- und Betriebsdatenerfassungssysteme der Instandhaltung von Maschinen und Aggregaten stellen moderne mobile Prüf- und Monitoring-Systeme dar. Dabei handelt es sich um eine kontinuierliche Datenerfassung von vordefinierten mit RFID-Label markierten Wechselteilen eines Aggregates, eine Online-/Offline Auswertung aller Zustände der Wechselteile durch ein mobiles äußeres oder eingebettetes Prüfsystem und nachträgliche Reporting aller relevanten Informationen an ein zentrales Verwaltungssystem.

In den Patentmeldungen US 6,671,646 B2, US 6,647,356 B2 und US 6859757 B2 sind unterschiedliche Einsätze der Online Condition Monitoring von Fahrzeugen im Verkehr und auf einem Prüfstand beschrieben. Aus der Sicht der Produktionsanlagen stellen die Konzepte jeweils eine lokale im Gerät eingebettete Speicherung von Betriebsdaten und Ereignissen (z.B. Produktionsmenge, Datum der letzten Prüfung, Warnungen von dem Kontrollsystem) dar. Die abgespeicherten Daten werden mittels eines lokalen Scanners vom Werkstattpersonal ausgelesen und an ein zentrales Verwaltungssystem mitgeteilt. Solchen lokalen Maintenance Inspektionssysteme mangelt es an der Flexibilität bzgl. diverser automatisierter technologischer Assistenz-Systeme, deren verfahrenstechnischer Analyse und Steuerungseingriffe in den Produktionsprozess.

EP 3 167 975 A1 offenbart eine Anlage der Hüttenindustrie umfassend eine Mehrzahl von Betriebsbereichen und mindestens ein bewegliches Aggregat mit einer Einheit zum Senden, Empfangen und Speichern von dem Aggregat zugeordneten Daten.

Alle der vorgenannten Verfahren weisen ferner den Nachteil auf, dass diese zumindest teilweise auf einer manuellen Dateneingabe basieren bzw. nur einen Teil der notwendigen Daten erfassen, so dass die verbleibenden Teile manuell eingegeben werden müssen. Manuelle Eingaben sind erfahrungsgemäß sehr fehleranfällig.

Ausgehend von dem vorbeschriebenen Stand der Technik liegt der Erfindung die Aufgabe zugrunde, eine weitestgehend autonome bzw. automatisierte Handhabung von Aggregaten einer Anlage der Hüttenindustrie bereitzustellen.

Die Aufgabe wird erfindungsgemäß gelöst durch eine Anlage der Hüttenindustrie gemäß Anspruch 1.

Die in der Einheit gespeicherten Daten bilden den Zustand des Aggregats virtuell ab. Der Zustand des Aggregats betrifft die Temperatur, der Verschleiß, den Verschmutzungsgrad, Kalkablagerungen, die Wartungshistorie, Kalibrierungsparameter, Verwendungshistorie, Restlebensdauer bzw. erwartete Lebensdauer bis zur nächsten Wartung, aktuelle Position, alte/neue Einbauposition oder jegliche andere Eigenschaft des Aggregats, welche durch den Einsatz oder die Bearbeitung des Aggregats in der Anlage der Hüttenindustrie beeinflusst wird. Das physikalische Aggregat umfasst somit erfindungsgemäß eine Einheit zum Senden, Empfangen und Speichern von dem Aggregat zugeordneten Daten, wobei die Daten einen virtuellen Zustand des Aggregats abbilden. Auf diesen virtuellen Zustand kann jederzeit zugegriffen werden, ohne dass Messungen oder aufwendige Recherchen durchgeführt werden müssen. Der virtuelle Zustand ist auch in jedem Betriebsbereich der Anlage verfügbar, da er in der Einheit des Aggregats hinterlegt ist, also unmittelbar zusammen mit dem Aggregat. Bei dem Aggregat handelt es sich somit um ein smart product, welches kommunikationsfähig ist und Daten über den eigenen (virtuellen) Zustand umfasst. Anhand der eingebetteten elektronischen Komponente (SA-Label, SA-Unit) und der Fähigkeit zur dezentralen, lokalen Datenabspeicherung sowie Datenverarbeitung, ergibt sich der Datenaustausch zwischen realen Aggregat und deren digitalen Zwilling über den Statusdaten, Messergebnissen, Einsatzplanung, Ortbestimmung, aktuelle Sensordaten.

Die Anlage der Hüttenindustrie weist erfindungsgemäß unterschiedliche Betriebsbereiche auf, welche die Eigenschaften des Aggregats unterschiedlich verändern. Beispiele für die unterschiedlichen Betriebsbereiche sind die Produktionsanlage, eine Werkstatt und ein Lager. In der Produktionsanlage unterliegt das Aggregat einem Verschleiß durch das Produktionsverfahren. Der Verschleiß richtet sich beispielsweise nach den Einsatzzeiten, dem herzustellenden Produkt, Produktionsgeschwindigkeiten und anderen Eigenschaften des Produktionsprozesses. Nach einer gewissen Standzeit in der Produktionsanlage muss das Aggregat in der Werkstatt repariert werden. Dazu wird es aus der Produktionsanlage entfernt, in die Werkstatt transportiert, dort repariert und anschließend ggf. über ein Lager wieder der Produktionsanlage zugeführt. Vor einer erneuten Verwendung in der Produktionsanlage kann das Aggregat ggf. in unmittelbarer Nähe zu der Produktionsanlage gelagert werden, damit es im Bedarfsfall schnell in die Produktionsanlage montiert werden kann. Ein Betriebsbereich verändert somit den Zustand des Aggregats, beispielsweise durch Verschleiß oder Reparatur. Als Betriebsbereich im Sinne der vorliegenden Erfindung können somit alle Anlagenteile angesehen werden, welche den Zustand des Aggregats verändern.

Gemäß der erfindungsgemäßen Anlage der Hüttenindustrie werden die Betriebsbereiche in virtuellen Räumen abgebildet, wobei die virtuellen Räume den virtuellen Zustand des in dem virtuellen Raum befindlichen Aggregats hinsichtlich der Nutzung des Aggregats in dem Betriebsbereich anpassen. Der virtuelle Raum beschreibt somit die Nutzung des Aggregats in dem physikalischen Betriebsbereich und passt entsprechend den virtuellen Zustand des Aggregats in der dem Aggregat zugehörigen Einheit an.

Der Begriff "Nutzung des Aggregats" deckt insbesondere auch die Erfassung von dessen Aufenthaltsort oder dessen Bewegung im Raum, dessen Bearbeitung, z. B. im Rahmen einer durchgeführten Wartung, sowie dessen Verwendung/Einsatz ab.

Die erfindungsgemäße Anlage der Hüttenindustrie ist somit als Cyber-Physisches System (CPS), insbesondere Cyber-Physisches Produktionssystem (CPPS), ausgebildet. Das reale (physische) System wird durch ein virtuelles (Cyber) System ergänzt, welches den realen Zustand der Anlage und der darin verwendeten Aggregate virtuell abbildet.

Die virtuellen Räume sind dabei beispielsweise als digitaler Schatten der Betriebsbereiche der physikalischen Anlage der Hüttenindustrie ausgebildet und die virtuellen Zustände sind beispielsweise als digitaler Schatten der physikalischen Zustände der Aggregate ausgebildet.

Der Aufenthalt der Aggregate in den unterschiedlichen Betriebsbereichen der Anlage der Hüttenindustrie wird durch das Sensornetz erfasst. Das Sensornetz erfasst insbesondere die Einheiten zum Senden, Empfangen und Speichern von dem Aggregat zugeordneten Daten. Erfassen bedeutet dabei, dass das Sensornetz bzw. ein Sensor/Knoten des Sensornetzes eine Einheit eines Aggregats erkennt und einen Datenaustausch mit der Einheit initiiert, beispielsweise über die Kommunikationsmittel des Betriebsbereiches.

Sobald das Sensornetz ein Aggregat bzw. eine dem Aggregat zugehörige Einheit zum Senden, Empfangen und Speichern von dem Aggregat zugeordneten Daten in einem virtuellen Raum erfasst, beispielsweise wenn ein Aggregat in einen Betriebsbereich Eintritt, wird eine Datenaustausch zwischen den Kommunikationsmitteln des Betriebsbereichs und der Einheit zum Senden, Empfangen und Speichern von dem Aggregat zugeordneten Daten initiiert, so dass der Betriebsbereich den virtuellen Zustand des Aggregats hinsichtlich der Nutzung des Aggregats in dem Betriebsbereich beurteilen kann.

Die erfindungsgemäße Anlage der Hüttenindustrie ist somit eine intelligente Fabrik (smart factory), bei welcher Teile der Anlage (Aggregate) den Produktionsprozess autonom beeinflussen.

Die erfindungsgemäße Anlage der Hüttenindustrie umfasst auch einen Leitstand zur Steuerung bzw. Prozessführung der Anlage der Hüttenindustrie. Der Leitstand berücksichtigt bei der Steuerung bzw. Prozessführung der Anlage der Hüttenindustrie die in den Einheiten der Aggregate gespeicherten Daten zu dem virtuellen Zustand der Aggregate hinsichtlich einer aktuellen und/oder zukünftigen Nutzung der Aggregate. Es wird somit beispielsweise der aktuelle Verschleiß der Aggregate bei der Planung des Produktionsprozesses berücksichtigt, so dass ggf. ein Aggregat ausgetauscht werden kann, bevor eine längere Produktionssequenz gestartet wird oder die Reihenfolge von unterschiedlich langen Produktionssequenzen wird unter Berücksichtigung von zu erwartenden Produktionsunterbrechungen angepasst. Der Produktionsprozess in der Anlage der Hüttenindustrie lässt sich hinsichtlich verschiedener Optimierungsziele optimieren. Optimierungsziele sind z.B. Minimierung von Wartungsstillständen, Abarbeitung einer Produktionssequenz ohne Unterbrechungen, Minimierung von Verschleiß, Reduzierung des Energiebedarfs, und dergleichen.

In einer erfindungsgemäßen Variante umfasst die Anlage der Hüttenindustrie weiterhin mindestens ein mobiles Endgerät, insbesondere für einen Benutzer, zur Kommunikation mit der Einheit des Aggregats und/oder den Kommunikationsmitteln des Betriebsbereichs. Das mobile Endgerät kann beispielsweise auch über die Kommunikationsmittel der Betriebsbereiche mit der Einheit des Aggregats kommunizieren, so dass die Daten über die Kommunikationsmittel des Betriebsbereiches zwischen dem mobilen Endgerät und der Einheit des Aggregats weitergeleitet werden. Das mobile Endgerät ist vorzugsweise als Messgerät ausgebildet, zur Durchführung einer Zustandskontrolle des Aggregats und/oder zur Diagnose/Prognose. Das Messgerät ist beispielsweise ein Rollenspaltprüfgerät zum Prüfen der Abnutzung, der Anstellung und/oder der Gängigkeit der Strangführungsrolle. Das mobile Endgerät passt vorzugsweise das virtuelle Modell in der Einheit des Aggregats an, beispielsweise zur Berücksichtigung der Ergebnisse der Inspektion/Messung. Ferner kann das mobile Endgerät von dem Benutzer beispielsweise auch dazu verwendet werden, das virtuelle Modell hinsichtlich vorgenommener Anpassungen und/oder Wartungen an dem Aggregat anzupassen. Das mobile Endgerät kann auch Anweisungen an einen Benutzer geben, beispielsweise zu durchzuführenden Arbeiten in den Betriebsbereichen. So kann dem Personal vorzugsweise auf einem Bildschirm des mobilen Endgerätes die Position und weitere Informationen zu einem zu wartenden oder tauschenden Aggregat angezeigt werden. Ferner kann das mobile Endgerät Informationen über das Aggregat an den Betriebsbereich übermitteln, insbesondere Informationen zu dem Aggregat die die aktuelle Verwendung des Aggregats in dem Betriebsbereich betreffen. Dazu ist das mobile Endgerät beispielsweise zur Kommunikation mit den Kommunikationsmitteln des Betriebsbereichs ausgebildet.

Das mobile Endgerät kann insbesondere als Anzeigegerät für einen Benutzer ausgebildet sein, welches aktuelle Probleme mit einem Aggregat anzeigt, durchzuführende Wartungsmaßnahmen, Anpassungen von Einstellungen, Informationen zur aktuellen Produktion, wie aktueller Produktqualitäten, oder anderen Informationen des Aggregats, eines oder mehrerer Betriebsbereiche oder der industriellen Anlage.

Gemäß einer Variante der Erfindung sind die Kommunikationsmittel der Betriebsbereiche ausgebildet zum Kommunizieren untereinander innerhalb und/oder außerhalb eines Betriebsbereiches und/oder zum Kommunizieren mit dem mobilen Endgerät des Benutzers und/oder zum Kommunizieren mit dem Leitstand. Somit können zwischen sämtlichen Bereichen der erfindungsgemäßen Anlage der Hüttenindustrie Daten ausgetauscht werden. Dies ermöglicht eine Berücksichtigung sämtlicher relevanter Daten bei der Planung der herzustellenden Produktionssequenz. Die Optimierungsziele lassen sich damit optimal umsetzen.

Nach einer weiteren Variante der Erfindung wird das Sensornetz aus einer Mehrzahl von miteinander vernetzten, insbesondere adressierbaren, Sensoren gebildet, zum Registrieren, Identifizieren und/oder Erfassen der Position und/oder des virtuellen Zustands des mindestens einen Aggregats. Die Sensoren eines Sensornetzwerks werden auch als Sensorknoten bezeichnet, welche üblicherweise einen Mikrocontroller, eine Programmierschnittstelle, eine Funk-/Netzwerkeinheit und den tatsächlichen Sensor umfassen, sowie eine Energiequelle, welche üblicherweise mobil ist, wie eine Batterie oder Photovoltaikzelle.

In einer zweckmäßigen Variante der Erfindung umfasst das Aggregat mindestens ein Wechselteil, welches mit einer separaten Einheit zum Senden, Empfangen und Speichern von dem Wechselteil zugeordneten Daten ausgestattet ist. Die Kommunikationsmittel und das Sensornetz der Betriebsbereiche sind zur Kommunikation mit der Einheit des Wechselteils und/oder der Erfassung des Wechselteils ausgebildet. Dies ist vorteilhaft, wenn das Aggregat separate Wechselteile umfasst, welche austauschbar sind. Somit kann der virtuelle Zustand dieser Teile des Aggregats separat überwacht und angepasst werden. Das Wechselteil kann auch als separates Aggregat angesehen werden, welches mit einem anderen Aggregat verbunden ist. Die virtuellen Zustände des Aggregats und des Wechselteils können miteinander verknüpft werden, um die physikalische Verbindung zwischen dem Aggregat und dem Wechselteil zu berücksichtigen.

Nach einer vorteilhaften Variante der Erfindung stellt das Aggregat ein Aggregatnetzwerk bereit, zur Kommunikation mit den Wechselteilen des Aggregats. Das Aggregatnetzwerk umfasst dabei die Funktionen eines Sensornetzwerks zur Erkennung von Einheiten der dem Aggregat zugeordneten Wechselteile und/oder die Funktionen eines Kommunikationsnetzwerks zur Kommunikation mit der Einheit der dem Aggregat zugeordneten Wechselteile. Mittels des Aggregatnetzwerks kann das Aggregat somit die ihm zugeordneten Wechselteile erfassen und/oder die in der Einheit des Wechselteils gespeicherten Daten Auslesen oder Modifizieren. In diesem Fall ist eine direkte Kommunikation zwischen den Kommunikationsmitteln des Betriebsbereichs und den Einheiten der Wechselteile nicht notwendig, da diese über das Aggregat erfolgt, welches die Informationen aus den Einheiten der Wechselteile über das Aggregatnetzwerk ausliest bzw. modifiziert.

In einer zweckmäßigen Variante umfasst das Aggregatnetzwerk zusätzlich Messgeräte und/oder Messsensoren zur Erfassung von Parametern der dem Aggregat zugehörigen Wechselteile.

Gemäß einer bevorzugten Variante der Erfindung umfasst die Anlage der Hüttenindustrie ein übergeordnetes Sensornetzwerk, welches die einzelnen Sensornetze der Betriebsbereiche miteinander vernetzt. Es können somit Informationen bezüglich des Standorts von Aggregaten in Betriebsbereichen unter den Sensornetzen der Betriebsbereiche ausgetauscht werden.

Zweckmäßigerweise sind die Sensornetze in den einzelnen Betriebsbereichen als sogenannte Ad-Hoc Netze ausgebildet, welche sich nach den aktuellen Begebenheiten und Anforderungen selbst organisieren und einen erforderlichen Datenaustausch automatisch veranlassen. Im Gegensatz dazu ist das übergeordnete Sensornetzwerk vorzugsweise als sogenanntes Infrastrukturnetzwerk mit einer vorgegebenen Netzwerktopologie ausgebildet, wodurch ein geordneter Datenaustausch zwischen den Sensornetzen der unterschiedlichen Betriebsbereiche gewährleistet wird.

In einer weiteren Variante der Erfindung umfasst die Anlage der Hüttenindustrie ein übergeordnetes Kommunikationsnetzwerk, welches die einzelnen Kommunikationsmittel der Betriebsbereiche miteinander vernetzt. Es können somit Daten zwischen den einzelnen Betriebsbereichen ausgetauscht werden, insbesondere hinsichtlich einer erfolgten und/oder geplanten Nutzung von Aggregaten in den Betriebsbereichen. Beispielsweise können somit Daten zu einer erfolgten Abnutzung oder einer geplanten Beanspruchung von Aggregaten zwischen den einzelnen Betriebsbereichen ausgetauscht werden, so dass die Betriebsbereiche die Informationen bei der Planung der eigenen Abläufe berücksichtigen können. Das Registrieren und/oder das Identifizieren des Aggregats und/oder des Wechselteils erfolgt durch einen Datenaustausch zwischen dem Sensor des Sensornetzes und der Einheit des Aggregats und/oder Wechseltei ls.

Gemäß einer Variante der Erfindung sind die Kommunikationsmittel und das Sensornetz der Betriebsbereiche integral miteinander ausgebildet, insbesondere durch Verwendung von intelligenten Sensoren oder Hot-Spots. Die intelligenten Sensoren übernehmen dabei zusätzlich die Funktion der Kommunikationsmittel, also die Kommunikation mit der Einheit des Aggregats und der Anpassung des in der Einheit gespeicherten virtuellen Zustands. Alternativ können Hot-Spots der Kommunikationsmittel gleichzeitig die Aufgabe des Sensornetzes erfüllen, beispielsweise dadurch, dass ein Aggregat, insbesondere die dem Aggregat zugehörige Einheit, in den Sende- und Empfangsbereich eines Hot-Spots gelangt. Die Trennung zwischen Kommunikationsmittel und Sensornetz ist somit erfindungsgemäß nicht zwingend erforderlich, kann aber hinsichtlich der Strukturierung, Auslastung und Sicherheit vorteilhaft sein. Intelligente Sensorknoten im Sinne der Erfindung umfassen eine Datenverarbeitungseinrichtung (Computer), einen Sensor und ein Kommunikationsmodul zur Kommunikation mit der Einheit des Aggregats und/oder Wechselteils. Ferner können die intelligenten Sensoren einen Datenspeicher umfassen.

Nach einer besonders vorteilhaften Variante der Erfindung umfasst die Anlage der Hüttenindustrie weiterhin ein übergeordnetes Netzwerk zur Kommunikation mit den Kommunikationsmitteln und/oder Sensornetzen der Betriebsbereiche und gegebenenfalls mit dem mobilen Endgerät des Benutzers, dem Leitstand der Anlage oder dergleichen. Generell kann das übergeordnete Netzwerk mit sämtlichen kommunikationsfähigen Elementen der Anlage kommunizieren und einen Datenaustausch zwischen diesen Elementen unterstützen und/oder veranlassen. Zweckmäßigerweise ist das übergeordnete Netzwerk in Form eines konfigurierten oder eines sich zumindest teilweise selbst organisierenden Netzwerkes ausgebildet, in welchem die einzelnen Komponenten autonom handeln und eine Kommunikation untereinander selbst auslösen und die im Rahmen der Kommunikation ausgetauschten Daten vorzugsweise selbst bestimmen. Das übergeordnete Netzwerk ermöglicht eine Kommunikation zwischen allen relevanten Elementen der Anlage, wie z.B. Betriebsbereiche, Aggregate und Wechselteile, insbesondere der Kommunikationsmittel der Betriebsbereiche und der Einheiten der Aggregate bzw. Wechselteile. Durch das übergeordnete Netzwerk lässt sich die Anlage einfach erweitern, da die neuen Elemente nur zur Kommunikation mit dem übergeordneten Netzwerk eingerichtet werden müssen. Über das bereits vorhandene übergeordnete Kommunikationsnetz können die neuen Elemente nachfolgend mit den bereits vorhandenen Elementen kommunizieren. Ein sich zumindest teilweise selbst organisierendes Netzwerk vereinfacht derartige Erweiterungen oder Anpassungen des übergeordneten Netzwerks zusätzlich.

In einer besonders zweckmäßigen Variante organisiert, kontrolliert und/oder überwacht das übergeordnete Netzwerk die Kommunikationsmittel und/oder Sensornetze der Betriebsbereiche und ist insbesondere zur Aktivierung und/oder Deaktivierung von einzelnen Kommunikationsmitteln und/oder Sensornetzen der Betriebsbereiche ausgebildet. Mittels des übergeordneten Netzwerks können somit die Betriebsbereiche, insbesondere die zugeordneten virtuellen Räume, organisiert, kontrolliert und/oder überwacht werden.

Gemäß einer zweckmäßigen Variante der Erfindung sind die Sensoren der Sensornetze der Betriebsbereiche als ortsfeste oder mobile Einheiten ausgebildet und in den jeweiligen Betriebsbereichen räumlich verteilt angeordnet. Die räumliche Verteilung gewährleistet die Abdeckung des gesamten Betriebsbereiches. Ortsfeste Sensoren sind vorteilhaft bei statischen Betriebsbereichen, welche sich üblicherweise nicht oder kaum verändern, während mobile Sensoren bei dynamischen sich regelmäßig ändernden Betriebsbereichen bevorzugt sind. Mobile Sensoren können auch mit einem mobilen Endgerät, beispielsweise Messgerät, verknüpft werden, wodurch das Messgerät feststellen kann, ob es sich in der Nähe eines Aggregats befindet.

Nach einer erfindungsgemäßen Variante umfassen die Betriebsbereiche Aktoren, welche eine Kommunikation zwischen den Kommunikationsmitteln der Betriebsbereiche und der Einheit zum Senden, Empfangen und Speichern von dem Aggregat und/oder Wechselteil zugeordneten Daten veranlassen. Die Aktoren der Betriebsbereiche führen Aktionen aus, welche sich auf den Zustand des Aggregats und/oder Wechselteils auswirken. Um diese bei dem zugehörigen virtuellen Zustand zu berücksichtigen, veranlassen die Aktoren die Kommunikation zwischen den Kommunikationsmitteln der Betriebsbereiche und der Einheit zum Senden, Empfangen und Speichern von dem Aggregat und/oder Wechselteil zugeordneten Daten, um den virtuellen Zustand entsprechend anzupassen.

Zweckmäßigerweise sind die Aktoren an Geräten und/oder Ausrüstungsgegenständen der Betriebsbereiche angeordnet, insbesondere Tore, Kräne, Werkzeuge, Trägerobjekte oder dergleichen.

In einer Variante der Erfindung ist die Einheit zum Senden, Empfangen und Speichern von dem Aggregat und/oder Wechselteil zugeordneten Daten als Smart-Label ausgebildet, insbesondere als semi-aktives Smart-Label. Ein Smart-Label im Sinne der Erfindung umfasst eine Datenverarbeitungseinrichtung mit digitalem Objektgedächtnis zur Speicherung von Daten. Dadurch kann das Smart-Label Aufgaben der Steuerung, Datenerfassung, Datengenerierung, Datenaufbereitung und Datenverarbeitung wenigstens teilweise selbstständig erledigen. Ein semi-aktives Smart-Label im Sinne der Erfindung umfasst kein eigenes Sendemodul, sondern moduliert Rückstreukoeffizienten, woraus eine erhebliche Energieeinsparung resultiert. Das semi-aktive Smart-Label wird von den Kommunikationsmitteln der Betriebsbereiche aktiviert, beispielsweise wenn das Sensornetz des Betriebsbereichs ein neues Aggregat und/oder Wechselteil in dem Betriebsbereich erkennt oder wenn der Zustand des Aggregats und/oder Wechselteils in dem Betriebsbereich verändert wird. Durch die Aktivierung wird ggf. der gespeicherte virtuelle Zustand angepasst oder der gespeicherte virtuelle Zustand wird an die Kommunikationsmittel der Betriebsbereiche gesendet, insbesondere durch eine Anpassung der Rückstreukoeffizienten.

Zweckmäßigerweise umfasst das Smart-Label Zustandssensoren zur Überwachung des Zustands des Aggregats und/oder Wechselteils. Somit kann bei einer Zustandsänderung des Aggregats und/oder Wechselteils automatisch der in der zugehörigen Einheit gespeicherte virtuelle Zustand angepasst werden.

Gemäß einer bevorzugten Variante der Erfindung umfasst wenigstens einer der Betriebsbereiche ein Messsensornetz mit einem oder mehreren Messsensoren zur Erfassung von Prozesszuständen, Maschinenzuständen und/oder Betriebszuständen. Da die Prozesszustände, Maschinenzustände und/oder Betriebszustände die Nutzung der Aggregate in dem Betriebsbereich beeinflussen bzw. beschreiben, sind die Betriebsbereiche mit Messsensornetzwerk zur Erfassung der Nutzung der Aggregate in dem Betriebsbereich ausgebildet, wobei beispielsweise die in der Einheit des Aggregats gespeicherten Daten entsprechend über die Kommunikationsmittel des Betriebsbereichs angepasst werden. Mittels der durch das Messsensornetz erfassten Zustände wird also die Nutzung des Aggregats in dem Betriebsbereich bestimmt und auf dieser Basis wird der virtuelle Zustand des in dem virtuellen Raum des entsprechenden Betriebsbereichs befindlichen Aggregats angepasst. Prozesszustände sind beispielsweise Temperaturen, Drücke, Geschwindigkeiten oder dergleichen. Die Maschinenzustände beschreiben beispielsweise den Standort eines Aggregats, den Verschleiß, die Abnutzung oder dergleichen. Die Betriebszustände sind beispielsweise die Betriebsphase (An/Aus), Hochfahren, Runterfahren, Havarie oder dergleichen.

In einer vorteilhaften Variante der Erfindung umfasst wenigstens einer der Betriebsbereiche eine Auswerteeinheit und/oder eine Analyseeinheit. Die Auswerteeinheit wertet den virtuellen Zustand eines Aggregats hinsichtlich einer Nutzung des Aggregats in dem Betriebsbereich aus. Es kann beispielsweise bestimmt werden, ob das Aggregat zur Bearbeitung des nächsten Auftrags geeignet ist oder ausgetauscht werden muss. Es findet also eine Auswertung des virtuellen Zustands des Aggregats hinsichtlich einer zukünftigen Nutzung in dem Betriebsbereich statt. Ferner kann die Auswerteeinheit die Auswirkungen des virtuellen Zustands des Aggregats auf andere Betriebsbereiche auswerten. Beispielsweise kann mit einem aktuellen Aggregat nur eine bestimmt Produktqualität erzielt werden, welche in nachfolgenden Betriebsbereichen eine andere Bearbeitung erfordern. In diesem Fall wird der nachfolgende Betriebsbereich entsprechend informiert, wenn die Auswerteinheit eine Auswirkung des virtuellen Zustands eines Aggregats auf einen anderen Betriebsbereich feststellt. Die Analyseeinheit analysiert beispielsweise den Einfluss des virtuellen Zustands des Aggregats auf das Betriebsergebnis des Betriebsbereichs und/oder der Anlage der Hüttenindustrie. So kann beispielsweise das Qualitätsmanagement darüber informiert werden, dass aufgrund des virtuellen Zustands eines Aggregats eine andere Qualität zu erwarten ist als ursprünglich bei der Produktionsplanung vorgesehen. Die Auswerte- und/oder Analyseeinheit gibt somit eine Rückmeldung an den Betriebsbereich und/oder die Anlage der Hüttenindustrie basierend auf dem aktuellen virtuellen Zustand von Aggregaten und passt gegebenenfalls die zukünftigen Produktions- und/oder Prozessparameter an bzw. schlägt eine entsprechende Anpassung vor.

Nach einer vorteilhaften erfindungsgemäßen Variante umfasst die Anlage der Hüttenindustrie eine Cloud beispielsweise als zentralen Datenspeicher, zentrale Auswerteeinheit und/oder zentrale Analyseeinheit. Die Speicherung der Daten in einer zentralen Cloud hat den Vorteil, dass jedes Element der Hüttenindustrie auf die zentral gespeicherten Daten zurückgreifen kann und dass lediglich für den zentralen Datenspeicher ein geeignetes Backup durchgeführt werden muss.

Bei der Anlage der Hüttenindustrie handelt es sich beispielsweise um eine Gießanlage zum Gießen von Gießprodukten aus Metall mit folgenden Betriebsbereichen: Betriebsbereich Gießbühne mit Leitstand, Betriebsbereich Kokillenwerkstatt, Betriebsbereich Strangführung, Betriebsbereich Segmentwerkstatt, Betriebsbereich Segment- und/oder Kokillenlager, Betriebsbereich Transportwege und/oder Betriebsbereich Labor. Das Aggregat der Gießanlage ist beispielsweise ein Drehturm, eine Verteilerrinne, eine Kokille, eine Strangführung, eine Strangführungsrolle oder eine Trenneinrichtung. Das Wechselteil der Gießanlage ist beispielsweise eine Stopfenstange der Verteilerrinne, die Seitenplatte einer Kokille, ein Segment, ein Segmentrahmen oder eine Strangführungsrolle der Strangführung als Aggregat, ein Lager der Strangführungsrolle als Aggregat, ein Antrieb, eine Düse, ein Hydraulikzylinder oder eine Schneideinrichtung.

Nach einer alternativen Variante handelt es sich bei der Anlage der Hüttenindustrie um ein Walzwerk mit mindestens einem Walzgerüst zum Walzen von Bändern oder Blechen aus Metall mit beispielsweise folgenden Betriebsbereichen: Betriebsbereich Ofen, Betriebsbereich Walzstraße bzw. Walzgerüste, Betriebsbereich Walzenwerkstatt, Betriebsbereich Kühlung, Betriebsbereich Haspel, Betriebsbereich Adjustage, Betriebsbereich Inspektion und/oder Betriebsbereich Transportwege. Bei dem Aggregat handelt es sich z.B. um ein Aggregat des Walzwerks, insbesondere einen Ofen, einen Zunderwäscher, einen Rollgang, ein Vor- oder Fertigwalzgerüst der Walzstraße, eine Kühlstrecke, ein Kühlbett, eine Trenneinrichtung, eine Haspeleinrichtung, eine Bindeeinrichtung zum Binden von Coils, eine Wärmebehandlungseinrichtung und/oder eine Inspektionseinrichtung. Das Wechselteil des Walzwerks ist beispielsweise eine Ofenrolle, ein Antrieb, eine Rollgangsrolle, eine Arbeits- oder Stützwalze eines Walzgerüstes, eine Düse, ein Messer, ein Brenner.

Die Aufgabe wird erfindungsgemäß ferner gelöst durch ein Verfahren zum Betreiben einer Anlage der Hüttenindustrie gemäß Anspruch 14.

Die reale Anlage der Hüttenindustrie wird somit erfindungsgemäß virtuell abgebildet. Die virtuellen Zustände der Aggregate der Anlage der Hüttenindustrie werden diesen direkt zugeordnet. Die Betriebsbereiche der Anlage der Hüttenindustrie werden in virtuellen Räumen abgebildet, welche den virtuellen Zustand der Aggregate hinsichtlich der Nutzung der Aggregate in den Betriebsbereichen anpasst. Dazu werden die Aufenthalte der Aggregate in den Betriebsbereichen der Anlage der Hüttenindustrie erfasst. Mittels der virtuellen Zustände der Aggregate kann beispielsweise eine Vorhersage über die verbleibende Restlebensdauer, die nächste anstehende Wartung, Einflüsse auf die Produktqualität, Ausfallzeiten der Anlage der Hüttenindustrie und viele weitere Variablen der Anlage der Hüttenindustrie und/oder der Aggregate getroffen werden. Diese Vorhersage ermöglicht ein effizientes Betreiben der Anlage der Hüttenindustrie.

In einer vorteilhaften Variante der Erfindung wird die Historie der Aufenthalte der Aggregate in Betriebsbereichen der Anlage der Hüttenindustrie in Form der virtuellen Zustände gespeichert. Es wird somit über die gesamte Lebensdauer des Aggregats der virtuelle Zustand überwacht und gespeichert. Somit stehen auch zu einem späteren Zeitpunkt noch Informationen bezüglich in der Vergangenheit vorgenommener Reparaturen, die bisherigen Einsätze des Aggregats und dergleichen zur Verfügung und können bei dem Betrieb der Anlage der Hüttenindustrie berücksichtigt werden.

Gemäß einer erfindungsgemäßen Variante umfasst das Verfahren den Schritt des Steuerns der Anlage der Hüttenindustrie unter Berücksichtigung der virtuellen Zustände der Aggregate hinsichtlich einer aktuellen Nutzung und/oder zukünftigen Nutzung der Aggregate. Dabei wird die aktuelle und/oder zukünftige Beanspruchung der Aggregate mit den virtuellen Zuständen der Aggregate verglichen und beurteilt, ob die Aggregate den aktuellen und/oder zukünftigen Anforderungen gerecht werden. Gegebenenfalls werden die Aggregate frühzeitig ausgetauscht oder die Produktionssequenz wird angepasst, so dass z.B. Produktionssequenzen mit hohen Anforderungen an Aggregate nach einer entsprechenden Wartung der besonders beanspruchten Aggregate ausgeführt wird.

Nach einer vorteilhaften Variante umfasst das Verfahren die Schritte des Auslesens und/oder Anpassens der virtuellen Zustände der Aggregate durch einen Benutzer. Der Benutzer kann somit beispielsweise den aktuellen virtuellen Zustand des Aggregats überprüfen, beispielsweise im laufenden Betrieb der Anlage. Im Falle einer Wartung des Aggregats kann der Benutzer anhand des ausgelesenen virtuellen Zustands die bei der Wartung besonders zu inspizierenden Teile des Aggregats identifizieren. Die durchgeführten Wartungsarbeiten werden durch eine Anpassung der virtuellen Zustände der Aggregate berücksichtigt. Der Benutzer passt somit den virtuellen Zustand des Aggregats gemäß den durchgeführten Wartungsarbeiten an.

In einer Variante des erfindungsgemäßen Verfahrens umfasst das Verfahren den Schritt einer Zustandskontrolle, Diagnose und/oder Prognose der Aggregate. Dies kann auch die Erstellung einer Handlungsempfehlung für Aggregate umfassen. Dieser Schritt wird beispielsweise mittels eines mobilen Endgeräts durchgeführt. Ein Beispiel für ein derartiges mobiles Endgerät ist ein Rollenspaltprüfgerät zum Prüfen der Abnutzung, der Anstellung und/oder der Gängigkeit von Strangführungsrollen. Die Ergebnisse der Zustandskontrolle, Diagnose und/oder Prognose können bei einer Anpassung der virtuellen Zustände der Aggregate und/oder bei dem Betreiben der Anlage der Hüttenindustrie berücksichtigt werden.

Gemäß einer Variante der Erfindung umfasst das Verfahren weiterhin die folgenden Schritte:
Zuordnen von virtuellen Zuständen zu Wechselteilen von Aggregaten,
Erfassen von Aufenthalten von Aggregaten mit deren Wechselteilen in Betriebsbereichen der Anlage der Hüttenindustrie, und
Anpassen der virtuellen Zustände der Wechselteile der Aggregate durch Aufenthalte in Betriebsbereichen der Anlage der Hüttenindustrie mittels der zugehörigen virtuellen Räume.

Diese Variante berücksichtigt somit Aggregate mit separaten zugehörigen Wechselteilen. Den Wechselteilen wird jeweils ein eigener virtueller Zustand zugeordnet, welcher wie der virtuelle Zustand der Aggregate ausgewertet und angepasst werden kann. Dadurch erhöht sich die Detailtiefe des erfindungsgemäßen Verfahrens und die erzielbaren Vorteile werden verbessert.

Zweckmäßigerweise werden Daten zwischen den Betriebsbereichen ausgetauscht, so dass alle Betriebsbereiche auf alle verfügbaren Daten zugreifen können. Das erfindungsgemäße Verfahren umfasst insbesondere den Schritt des Austauschs von Daten zwischen Betriebsbereichen der Anlage, mobilen Endgeräten von Benutzern und/oder einem Leitstand der Anlage mittels eines übergeordneten Netzwerks.

Nach einer vorteilhaften Variante erfolgt der Austausch der Daten autonom, insbesondere durch einen autonomen Aufbau einer Kommunikation zwischen den Kommunikationspartnern. Der autonome Aufbau der Kommunikation umfasst beispielsweise eine Verständigung auf ein gemeinsames Kommunikationsprotokoll aus einer Mehrzahl von verfügbaren Kommunikationsprotokollen im Hinblick auf spezifische Anforderungen des Informationsaustausches im Rahmen der Kommunikation.

In einer Variante der Erfindung werden die Zustände der Aggregate und/oder Wechselteile überwacht und gegebenenfalls wird der virtuelle Zustand des Aggregats und/oder Wechselteils angepasst. Durch die Überwachung der Zustände der Aggregate und der Anpassung der virtuellen Zustände der Aggregate und/oder Wechselteile stehen dem erfindungsgemäßen Verfahren jederzeit die aktuell dem Zustand der Aggregate und/oder Wechselteile entsprechenden virtuellen Zustände für das Betreiben der Anlage der Hüttenindustrie zur Verfügung. Die Zustände der Aggregate und/oder Wechselteile können beispielsweise mittels geeigneter Sensoren überwacht werden.

Nachfolgend wird die Erfindung anhand der in den Figuren dargestellten Ausführungsbeispiele näher erläutert. Es zeigen:
Fig. 1 eine schematische Ansicht einer erfindungsgemäßen Anlage der Hüttenindustrie,
Fig. 2 eine schematische Ansicht eines Betriebsbereichs einer erfindungsgemäßen Anlage der Hüttenindustrie,
Fig. 3 eine schematische Ansicht eines Wartungsfalls im Betriebsbereich gemäß Fig. 2,
Fig. 4 eine Rollengängigkeitskarte eines Segments einer Strangführung,
Fig. 5a - 5d unterschiedliche Datenstrukturen eines virtuellen Zustands,
Fig. 6 eine schematische Nutzung der Erfindung bei der Produktion, Instandhaltung und Qualitätssicherung in einer Anlage der Hüttenindustrie,
Fig. 7 weitere Details zu der Produktion aus Fig. 6,
Fig. 8 ein Beispiel für eine Planung von einem zukünftig in der Produktion aus Fig. 6 herzustellendem Produkt, und
Fig. 9 ein Beispiel für ein cyber-physisches Produktionssystem, welches eine weitere Vertiefung der Produktionsplanung ermöglicht, inklusive Simulation verschiedener Produktionsereignisse unter Berücksichtigung aktueller Aggregatzustände.

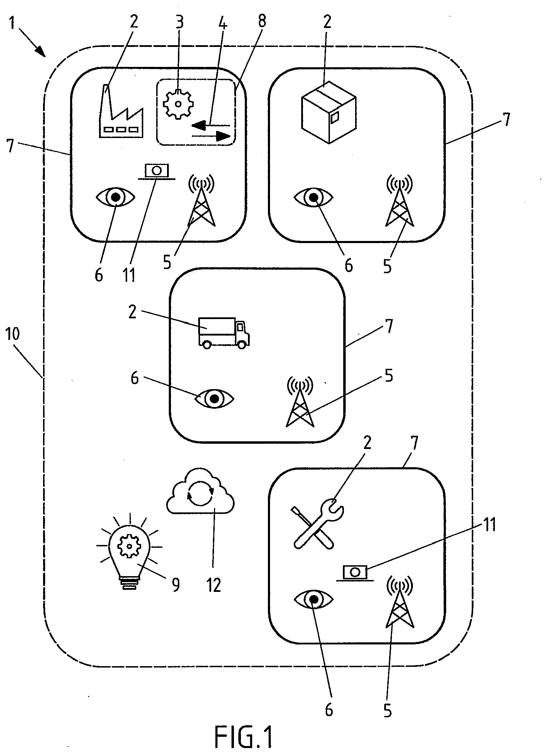

Fig. 1 zeigt eine schematische Ansicht einer erfindungsgemäßen Anlage 1 der Hüttenindustrie. Die Anlage 1 umfasst mehrere Betriebsbereiche 2. Gemäß dem Ausführungsbeispiel aus Fig. 1 sind dies ein Produktionsbereich symbolisiert durch ein Fabrikgebäude, ein Lagerbereich symbolisiert durch einen Lagerkarton, einen Transportbereich symbolisiert durch einen LKW und eine Werkstatt symbolisiert durch einen Schraubenschlüssel und einen Schraubenzieher.

Die Anlage 1 aus Fig. 1 umfasst ferner mindestens ein bewegliches Aggregat 3, symbolisiert durch ein Zahnrad. Das Aggregat 3 befindet sich gemäß Fig. 1 in dem Produktionsbereich der Anlage 1.

Das Aggregat 3 weist eine Einheit 4 zum Senden, Empfangen und Speichern von dem Aggregat 3 zugeordneten Daten auf. Ferner umfassen die Betriebsbereiche 2 jeweils ein Kommunikationsmittel 5 zur Kommunikation mit der Einheit 4 des Aggregats 3 und ein Sensornetz 6 zur Erfassung von in den Betriebsbereichen befindlichen Aggregaten 3.

Die dem Aggregat zugeordneten Daten bilden einen virtuellen Zustand 8 ab, symbolisiert durch eine gestrichelte Linie um das Aggregat 3 und die Einheit 4 zum Senden, Empfangen und Speichern.

Ferner sind erfindungsgemäß die Betriebsbereiche 2 als virtuelle Räume 7 abgebildet, symbolisiert durch die Umrahmung des jeweiligen Betriebsbereichs 2 und der zugehörigen Kommunikationsmittel 5 und Sensornetze 6.

Gemäß Fig. 1 ist das Aggregat 3 in dem Produktionsbereich der Anlage 1 angeordnet. Daher ist das Aggregat 3 und der zugehörige virtuelle Zustand 8 innerhalb des virtuellen Raums 7 des Produktionsbereichs angeordnet.

Die virtuellen Räume 7 sind dazu ausgebildet, den virtuellen Zustand 8 des in dem virtuellen Raum 7 befindlichen Aggregats 3 hinsichtlich der Nutzung des Aggregats 3 in dem Betriebsbereich 2 anzupassen.

Den Aggregaten 3 der Anlage 1 werden somit virtuelle Zustände 8 zugeordnet und den Betriebsbereichen 2 der Anlage 1 werden virtuelle Räume 7 zugeordnet, wobei die virtuellen Räume 7 die virtuellen Zustände 8 der in dem zugehörigen Betriebsbereich 2 befindlichen Aggregate 3 hinsichtlich der Nutzung des Aggregate 3 in dem Betriebsbereich 2 anpassen.

Dazu werden die Aufenthalte der Aggregate 3 in Betriebsbereichen 2 der Anlage 1 mittels der Sensornetze 6 erfasst.

Der Zustand des Aggregats 3 betrifft beispielsweise die Temperatur, den Verschleiß, den Verschmutzungsgrad, Kalkablagerungen, die Wartungshistorie, Kalibrierungsparameter, Verwendungshistorie, Restlebensdauer bzw. erwartete Lebensdauer bis zur nächsten Wartung, aktuelle Position, alte/neue Einbauposition oder jegliche andere Eigenschaft des Aggregats 3, welche durch den Einsatz oder die Bearbeitung des Aggregats 3 in der Anlage 1 der Hüttenindustrie beeinflusst wird. Das physikalische Aggregat 3 umfasst somit erfindungsgemäß eine Einheit 4 zum Senden, Empfangen und Speichern von dem Aggregat 3 zugeordneten Daten, wobei die Daten einen virtuellen Zustand 8 des Aggregats 3 abbilden. Der virtuelle Zustand 8 ist in jedem Betriebsbereich 2 der Anlage 3 verfügbar, da er in der Einheit 4 des Aggregats 3 hinterlegt ist, also unmittelbar zusammen mit dem Aggregat 3.

Eine Auswerteeinheit (nicht dargestellt), welche beispielsweise in einem Betriebsbereich 2 angeordnet ist, kann den virtuellen Zustand 8 eines oder mehrere Aggregate 8 hinsichtlich einer Nutzung des Aggregats 3 in dem Betriebsbereich 2 und/oder Auswirkungen auf andere Betriebsbereiche 2 auswerten. Eine Analyseeinheit (nicht dargestellt) kann den Einfluss des virtuellen Zustands 8 des Aggregats 3 auf das Betriebsergebnis des Betriebsbereichs 2 und/oder der Anlage 1 der Hüttenindustrie analysieren. Durch die Auswertung und/oder Analyse kann die Nutzung des Aggregats 3 in einem Betriebsbereich 2 oder der Betrieb der Anlage 1 der Hüttenindustrie an den virtuellen Zustand 8 des Aggregats 3 angepasst werden, beispielsweis hinsichtlich der herzustellenden Produkte. Auch können sich unterschiedliche Betriebsbereiche 2 untereinander hinsichtlich der Produktion, beispielsweise der zu erwartenden Produkteigenschaften, -qualitäten austauschen und gegebenenfalls den Betrieb anpassen.

Die Anlage 1 der Hüttenindustrie weist die oben genannten Betriebsbereiche 2 auf, welche die Eigenschaften des Aggregats 3 unterschiedlich beeinflussen. In der Produktionsanlage unterliegt das Aggregat 3 einem Verschleiß durch das Produktionsverfahren. Der Verschleiß richtet sich beispielsweise nach den Einsatzzeiten, dem herzustellenden Produkt, Produktionsgeschwindigkeiten und anderen Eigenschaften des Produktionsprozesses. Nach einer gewissen Standzeit in der Produktionsanlage muss das Aggregat 3 in der Werkstatt repariert werden. Dazu wird es aus der Produktionsanlage entfernt, in die Werkstatt transportiert, dort repariert und anschließend ggf. über ein Lager wieder der Produktionsanlage zugeführt. Ein Betriebsbereich 2 verändert somit den Zustand des Aggregats 3, beispielsweise durch Verschleiß oder Reparatur.

Gemäß der erfindungsgemäßen Anlage 1 der Hüttenindustrie werden die Betriebsbereiche 2 in virtuellen Räumen 7 abgebildet, wobei die virtuellen Räume 7 den virtuellen Zustand 8 des in dem virtuellen Raum 7 befindlichen Aggregats 3 hinsichtlich der Nutzung des Aggregats 3 in dem Betriebsbereich 2 anpassen. Der virtuelle Raum 7 beschreibt somit die Nutzung des Aggregats 3 in dem physikalischen Betriebsbereich 2 und passt entsprechend den virtuellen Zustand 8 des Aggregats 3 in der dem Aggregat 3 zugehörigen Einheit 4 an.

Der Aufenthalt der Aggregate 3 in den unterschiedlichen Betriebsbereichen 2 der Anlage 1 der Hüttenindustrie wird durch das Sensornetz 6 erfasst. Das Sensornetz 6 erfasst insbesondere die Einheiten 4 zum Senden, Empfangen und Speichern von dem Aggregat 3 zugeordneten Daten. Sobald ein Sensornetz 6 eine Einheit 4 eines Aggregats 3 erkennt, wird ein Datenaustausch mit der Einheit 4 initiiert, beispielsweise über die Kommunikationsmittel 5 des Betriebsbereiches 2. Zweckmäßigerweise wird die Historie der Aufenthalte der Aggregate 3 in den Betriebsbereichen 2 der Anlage 1 der Hüttenindustrie in Form von virtuellen Zuständen 8 gespeichert.

Die Anlage 1 der Hüttenindustrie gemäß Fig. 1 umfasst ferner einen Leitstand 9 zur Steuerung bzw. Prozessführung der Anlage 1 der Hüttenindustrie. Der Leitstand 9 berücksichtigt bei der Steuerung bzw. Prozessführung der Anlage 1 der Hüttenindustrie die in den Einheiten 4 der Aggregate 3 gespeicherten Daten zu dem virtuellen Zustand 8 der Aggregate 3 hinsichtlich einer aktuellen und/oder zukünftigen Nutzung der Aggregate 3.

Die Anlage 1 der Hüttenindustrie wird folglich unter Berücksichtigung der virtuellen Zustände 8 der Aggregate 3 und einer aktuellen und/oder zukünftigen Nutzung der Aggregate 3 gesteuert.

Die Anlage 1 der Hüttenindustrie umfasst weiterhin mobile Endgeräte 11 für Benutzer 16 zur Kommunikation mit den Einheiten 4 der Aggregate 3. Beispielsweise kommuniziert das mobile Endgerät 11 über die Kommunikationsmittel 5 der Betriebsbereiche 2 mit der Einheit 4 des Aggregats 3. Es können somit die virtuellen Zustände 8 von einem Benutzer 16 ausgelesen und ggf. angepasst werden.

In Fig. 1 ist ein mobiles Endgerät 11 im Produktionsbereich und ein weiteres mobiles Endgerät 11 im Wartungsbereich angeordnet. Der Benutzer 16 kann somit während der Produktion und der Wartung auf die in der Einheit 4 gespeicherten Daten zugreifen und diese ggf. anpassen.

Das mobile Endgerät 11 ist vorzugsweise als Messgerät ausgebildet, zur Durchführung eine Zustandskontrolle des Aggregats 3 und/oder zur Diagnose/Prognose. Das Messgerät ist beispielsweise ein Rollenspaltprüfgerät zum Prüfen der Abnutzung, der Anstellung und/oder der Gängigkeit der Strangführungsrolle. Das mobile Endgerät 11 kann auch als Anzeigegerät für einen Benutzer 16 ausgebildet sein, welches aktuelle Probleme mit einem Aggregat 3 anzeigt, insbesondere durchzuführende Wartungsmaßnahmen, Anpassungen von Einstellungen, Informationen zur aktuellen Produktion, wie aktueller Produktqualitäten, oder anderen Informationen des Aggregats 3, eines oder mehrerer Betriebsbereiche 2 oder der industriellen Anlage 1.

Zweckmäßigerweise sind die Kommunikationsmittel 5 der Betriebsbereiche 2 zum Kommunizieren untereinander innerhalb und/oder außerhalb eines Betriebsbereichs 2 und/oder zum Kommunizieren mit einem mobilen Endgerät 11 eines Benutzers 16 ausgebildet. Es kann somit ein Datenaustausch zwischen den Betriebsbereichen 2 und/oder dem mobilen Endgerät 11 stattfinden.

Das Sensornetz 6 kann aus einer Mehrzahl von miteinander vernetzten, insbesondere adressierbaren, Sensoren gebildet werden, zum Registrieren, Identifizieren und/oder Erfassen der Position und/oder des virtuellen Zustands 8 des mindestens einen Aggregats 3.

In einer vorteilhaften Ausgestaltung der Erfindung sind die Kommunikationsmittel 5 und das Sensornetz 6 der Betriebsbereiche 2 integral miteinander ausgebildet, insbesondere durch Verwendung von intelligenten Sensoren und/oder Hot-Spots.

Die Anlage 1 der Hüttenindustrie aus Fig. 1 umfasst weiterhin ein übergeordnetes Netzwerk 10 zur Kommunikation mit den Kommunikationsmitteln 5 und/oder Sensornetzen 6 der Betriebsbereiche 2 und ggf. mit den mobilen Endgeräten 11 der Benutzer 16, dem Leitstand 9 der Anlage 1 oder dergleichen. Es kann folglich ein Austausch von Daten zwischen den Betriebsbereichen 2 der Anlage 1, der mobilen Endgeräte 11 der Benutzer 16 und/oder dem Leitstand 9 der Anlage 1 mittels des übergeordneten Netzwerks 10 erfolgen.

Die industrielle Anlage 1 kann beispielsweise auch ein übergeordnetes Sensornetzwerk (nicht dargestellt) umfassen, welches die einzelnen Sensornetze 6 der unterschiedlichen Betriebsbereiche 2 untereinander verbindet. Es können somit Informationen bezüglich des Standorts von Aggregaten 3 in Betriebsbereichen 2 unter den unterschiedlichen Sensornetzen 6 der Betriebsbereiche 2 ausgetauscht werden. Zweckmäßigerweise sind die Sensornetze 6 in den einzelnen Betriebsbereichen 2 als sogenannte Ad-Hoc Netze ausgebildet, welche sich nach den aktuellen Begebenheiten und Anforderungen selbst organisieren und einen erforderlichen Datenaustausch automatisch veranlassen. Dadurch lässt sich eine Energieeinsparung erzielen. Allerdings gibt es keine vorgeschriebenen Kommunikationswege, so dass sich ggf. die Kommunikationsdauer verlängert. Da die Kommunikationswege in einem Betriebsbereich 2 begrenzt sind, stellt dies üblicherweise kein Problem dar. Im Gegensatz dazu ist das übergeordnete Sensornetzwerk vorzugsweise als sogenanntes Infrastrukturnetzwerk mit einer vorgegebener Netzwerktopologie ausgebildet, wodurch ein geordneter Datenaustausch zwischen den Sensornetzen 6 der unterschiedlichen Betriebsbereiche 2 gewährleistet wird.

Die Anlage 1 der Hüttenindustrie kann zusätzlich ein übergeordnetes Kommunikationsnetzwerk (nicht dargestellt) umfassen, welches die einzelnen Kommunikationsmittel 5 der Betriebsbereiche 2 miteinander vernetzt. Es können somit Daten zwischen den einzelnen Betriebsbereichen 2 ausgetauscht werden, insbesondere hinsichtlich einer erfolgten und/oder geplanten Nutzung von Aggregaten 3 in den Betriebsbereichen 2. Beispielsweise können somit Daten zu einer erfolgten Abnutzung oder einer geplanten Beanspruchung von Aggregaten 3 zwischen den einzelnen Betriebsbereichen 2 ausgetauscht werden, so dass die Betriebsbereiche 2 die Informationen bei der Planung der eigenen Abläufe berücksichtigen können.

Das übergeordnete Netzwerk 10 ist insbesondere in Form eines konfigurierten oder eines sich zumindest teilweise selbst organisierenden Netzwerkes 10 ausgebildet, in welchem die einzelnen Komponenten autonom handeln und eine Kommunikation untereinander selbst auslösen und die im Rahmen der Kommunikation ausgetauschten Daten vorzugsweise selbst bestimmen. Der autonome Aufbau der Kommunikation kann auch eine Verständigung auf ein gemeinsames Kommunikationsprotokoll aus einer Mehrzahl von verfügbaren Kommunikationsprotokollen umfassen. Das übergeordnete Netzwerk 10 ermöglicht eine Kommunikation zwischen allen relevanten Elementen der Anlage 1, wie z. B. Betriebsbereiche 2, Aggregate 3 und Wechselteile, insbesondere der Kommunikationsmittel 5 der Betriebsbereiche 2 und der Einheiten 4 der Aggregate 3 bzw. Wechselteile.

Vorzugsweise organisiert, kontrolliert und/oder überwacht das übergeordnete Netzwerk 10 die Kommunikationsmittel 5 und/oder Sensornetze 6 der Betriebsbereiche 2 und ist insbesondere zur Aktivierung und/oder Deaktivierung von einzelnen Kommunikationsmitteln 5 und/oder Sensornetzen 6 der Betriebsbereiche 2 ausgebildet. Mittels des übergeordneten Netzwerks 10 können somit die Betriebsbereiche 2, insbesondere die zugeordneten virtuellen Räume 7, organisiert, kontrolliert und/oder überwacht werden.

Die Sensoren der Sensornetze 6 der Betriebsbereiche 2 können als ortsfeste oder mobile Einheiten ausgebildet sein und sind insbesondere in den jeweiligen Betriebsbereichen 2 räumlich verteilt angeordnet.

Zweckmäßigerweise umfassen die Betriebsbereiche 2 Aktoren (nicht dargestellt), welche eine Kommunikation zwischen den Kommunikationsmitteln 5 der Betriebsbereiche 2 und der Einheit 4 zum Senden, Empfangen und Speichern von dem Aggregat 3 und/oder Wechselteil zugeordneten Daten veranlassen. Die Aktoren der Betriebsbereiche 2 führen Aktionen aus, welche sich auf den Zustand des Aggregats 3 und/oder Wechselteils auswirken. Um diese bei dem zugehörigen virtuellen Zustand 8 zu berücksichtigen, veranlassen die Aktoren die Kommunikation zwischen den Kommunikationsmitteln 5 der Betriebsbereiche 2 und der Einheit 4 zum Senden, Empfangen und Speichern von dem Aggregat 3 und/oder Wechselteil zugeordneten Daten, um den virtuellen Zustand 8 entsprechend anzupassen. Insbesondere sind die Aktoren an Geräten und/oder Ausrüstungsgegenständen der Betriebsbereiche 2 angeordnet, insbesondere Tore, Kräne, Werkzeuge, Trägerobjekte oder dergleichen.

Die Einheit 4 zum Senden, Empfangen und Speichern von dem Aggregat 3 und/oder Wechselteil zugeordneten Daten ist beispielsweise als Smart-Label ausgebildet, insbesondere als semi-aktives Smart-Label. Ein Smart-Label im Sinne der Erfindung umfasst eine Datenverarbeitungseinrichtung mit digitalem Objektgedächtnis zur Speicherung von Daten. Dadurch kann das Smart-Label Aufgaben der Steuerung, Datenerfassung, Datengenerierung, Datenaufbereitung und Datenverarbeitung wenigstens teilweise selbstständig erledigen. Ein semi-aktives Smart-Label im Sinne der Erfindung umfasst kein eigenes Sendemodul, sondern moduliert die Rückstreukoeffizienten, wodurch eine erhebliche Energieeinsparung resultiert.

Vorteilhafterweise umfasst das Smart-Label Zustandssensoren zur Überwachung des Zustands des Aggregats 3 und/oder Wechselteils. Somit kann bei einer Zustandsänderung des Aggregats 3 und/oder Wechselteils automatisch der in der zugehörigen Einheit 4 gespeicherte virtuelle Zustand 8 angepasst werden.

Die Anlage 1 der Hüttenindustrie aus Fig. 1 umfasst ferner eine Cloud 12 als zentralen Datenspeicher, Auswerteeinheit und/oder Analyseeinheit.

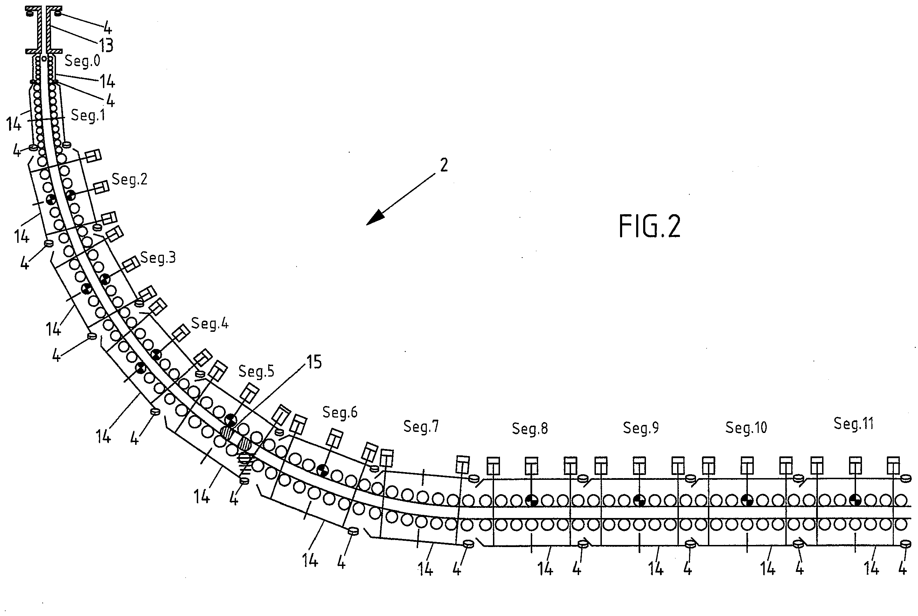

Fig. 2 zeigt eine schematische Ansicht eines Betriebsbereichs 2 einer erfindungsgemäßen Anlage 1 der Hüttenindustrie. Der dargestellte Betriebsbereich 2 ist Teil einer Stranggießanlage mit einer Kokille 13 und einer in mehrere Segmente unterteilte Strangführung 14. Die Kokille 13 und die einzelnen Segmente der Strangführung 14 bilden die Aggregate 3 der erfindungsgemäßen Anlage 1. Die Kokille 13 und die Segmente der Strangführung 14 weisen daher jeweils eine Einheit 4 zum Senden, Empfangen und Speichern von dem Aggregat 3 zugeordneten Daten auf.

Die Kokille 13 und die Segmente der Strangführung 14 müssen durch die Beanspruchung während des Betriebs in regelmäßigen Abständen gewartet werden. Die Beanspruchung der Kokille 13 und der Segmente der Strangführung 14 in dem Betriebsbereich 2 sind in dem zugehörigen virtuellen Raum 7 beschrieben. Anhand der virtuellen Räume 7 werden die virtuellen Zustände 8 der Kokille 13 und der Segmente der Strangführung 14 während des Betriebs kontinuierlich angepasst. Die Anpassung erfolgt mittels der Kommunikationsmittel 5 des Betriebsbereichs 2.

Im Wartungsfall werden die Kokille 13 bzw. die Segmente der Strangführung 14 aus der Stranggießanlage entfernt und zu einer Werkstatt transportiert, wo sie repariert bzw. instandgesetzt werden, um nachfolgend wieder in einer Stranggießanlage eingesetzt zu werden. Um unnötige Stillstände zu vermeiden, werden die Kokille 13 und die Segmente der Strangführung 14 unmittelbar durch vergleichbare Elemente ersetzt.

Die Beanspruchung der Kokille 13 und der Segmente der Strangführung 14 werden in Form von virtuellen Zuständen 8 in der jeweiligen Einheit 4 zum Senden, Empfangen und Speichern abgelegt. Die Anlage 1 der Hüttenindustrie kann die Produktion unter Berücksichtigung des aktuellen Auftragsbestands und dem aktuellen Zustand der Anlage 1 basierend auf den virtuellen Zuständen 8 planen und entsprechende Stillstände für Komponentenwechsel vorsehen.

Die Zustände der Kokille 13 oder der Segmente der Strangführung 14 können ferner durch ein mobiles Endgerät 11 überprüft werden. Ein Beispiel für ein derartiges mobiles Endgerät 11 ist ein als Roll-Gap-Checker bezeichnetes Messgerät 15, welches die einzelnen Segmente der Strangführung 14 überprüft und ggf. die virtuellen Zustände 8 der einzelnen Segmente der Strangführung 14 anpasst. Dazu kann das Messgerät 15 einen mobilen Sensor des Sensornetzwerks 6 des Betriebsbereichs 2 aufweisen. Mittels des mobilen Sensors kann das Messgerät 15 die jeweiligen Einheiten 4 der Segmente der Strangführung 14 erkennen und die entsprechenden virtuellen Zustände 8 anhand der aktuellen Messungen anpassen.

Die Details der Kommunikationsmittel 5 und des Sensornetzes 6 sind in Fig. 2 übersichtshalber nicht dargestellt.

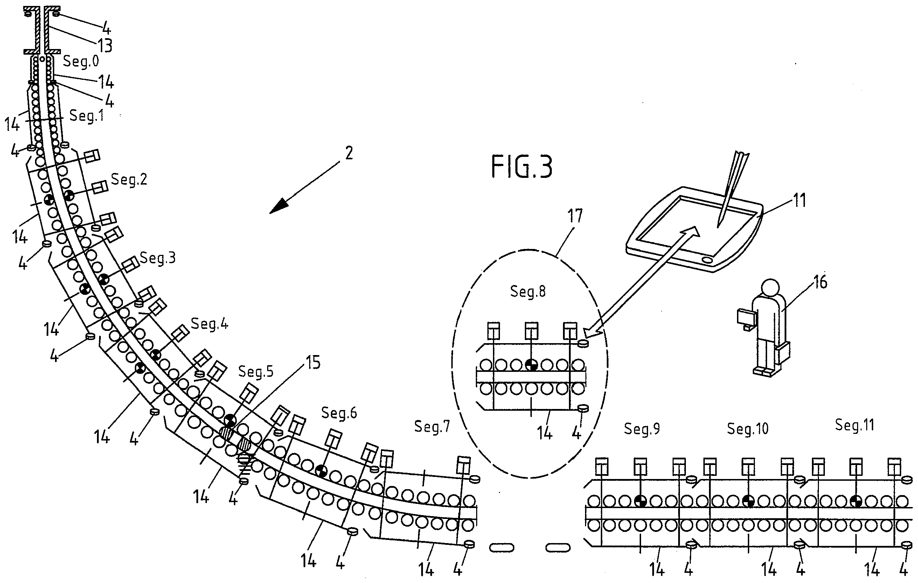

In Fig. 3 ist eine schematische Ansicht eines Wartungsfalls im Betriebsbereich 2 gemäß Fig. 2 dargestellt. Der in Zusammenhang mit Fig. 3 beschriebene Wartungsfall betrifft den Tausch eines Segments der Strangführung 14.

Ein Benutzer 16 wurde über ein mobiles Endgerät 11 auf den Wartungsfall aufmerksam gemacht. Die Details zu dem Wartungsfall können beispielsweise auf einem Bildschirm des mobilen Endgeräts 11 dargestellt werden.

Der Benutzer 16 identifiziert das zu tauschende Segment der Strangführung 14. Dazu kann das mobile Endgerät 11 beispielsweise mit den Einheiten 4 der Segmente der Strangführung 14 kommunizieren, ggf. mittels der Kommunikationsmittel des Betriebsbereichs 2.

Nachdem der Benutzer 16 das auszutauschende Segment der Strangführung identifiziert hat, kann er das entsprechende Segment der Strangführung 14 austauschen und den Austausch als virtuellen Zustand 8 in der Einheit 4 des getauschten Segments der Strangführung 14 speichern. Das ausgetauschte Segment der Strangführung 14 kann anschließend in eine Werkstatt transportiert und anhand des virtuellen Zustand 8 und ggf. weiterer Untersuchungen gewartet werden. Der neue Zustand nach der Wartung wird wiederum als virtueller Zustand 8 in der Einheit 4 des Segments der Strangführung 14 gespeichert. Nachfolgend kann das Segment der Strangführung 14 vorzugsweise zurück in den Betriebsbereich 2, also der Strangführung 14, transportiert werden, um dort auf den nächsten Einsatz zu warten. Dadurch verringert sich die für einen Tausch von Segmenten der Strangführung 14 benötigte Zeit, da sich das neue einzusetzende Segment der Strangführung 14 unmittelbar vor Ort befindet.

Fig. 3 zeigt ferner ein Aggregat 3, welches ein Aggregatnetzwerk 17 zur Kommunikation mit den Wechselteilen des Aggregats 3 bereitstellt. Das Aggregatnetzwerk 17 umfasst dabei die Funktionen eines Sensornetz 6 zur Erkennung von Einheiten 4 der dem Aggregat 3 zugeordneten Wechselteile und/oder die Funktionen eines Kommunikationsnetzwerks zur Kommunikation mit der Einheit 4 der dem Aggregat 3 zugeordneten Wechselteile. Mittels des Aggregatnetzwerks 17 kann das Aggregat 3 die ihm zugeordneten Wechselteile erfassen und/oder die in der Einheit 4 des Wechselteils gespeicherten Daten Auslesen oder Modifizieren. In diesem in Figur 3 dargestellten Beispiel ist das Aggregat 3 ein Segment der Strangführung 14 und entsprechende Wechselteile sind die einzelnen Rollen des Segments der Strangführung. In der Werkstatt können beispielsweise anhand einer Rollengängigkeitskarte einzelne Rollen als Wechselteile des Aggregats 3 ausgetauscht werden, welche sich über das Aggregatnetzwerk 17 mit dem Aggregat 3 verbinden, so dass der virtuelle Zustand des Aggregats 3 entsprechend angepasst wird.

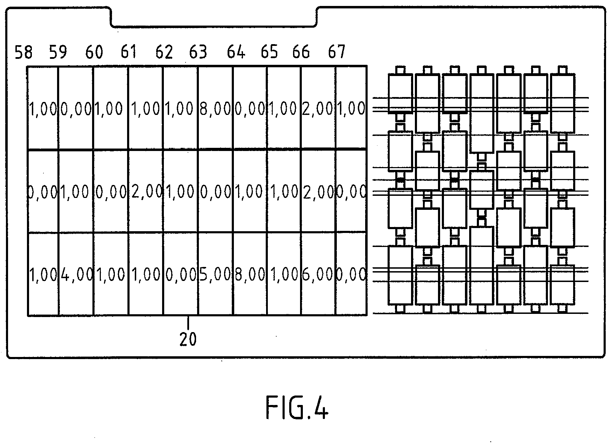

Dem Wartungspersonal in der Wartung wird auf einem mobilen Endgerät 11 beispielsweise eine in Fig. 4 dargestellte Rollengängigkeitskarte dargestellt, welche von einem Messgerät 15 erstellt wurde und als virtueller Zustand 8 in der Einheit 4 des Segments der Strangführung 14 hinterlegt wurde. Das Wartungspersonal kann die zu tauschenden Rollen mittels der Rollengängigkeitskarte leicht identifizieren und tauschen.

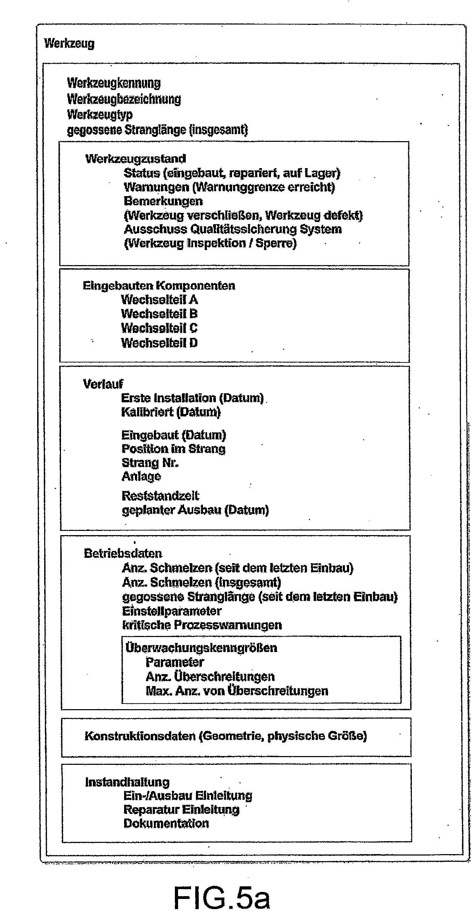

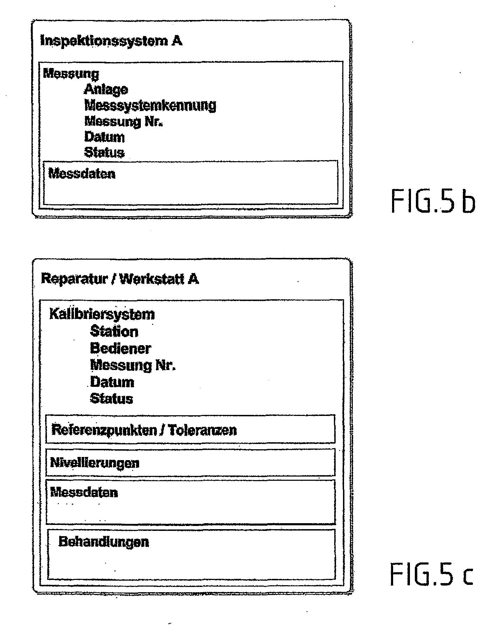

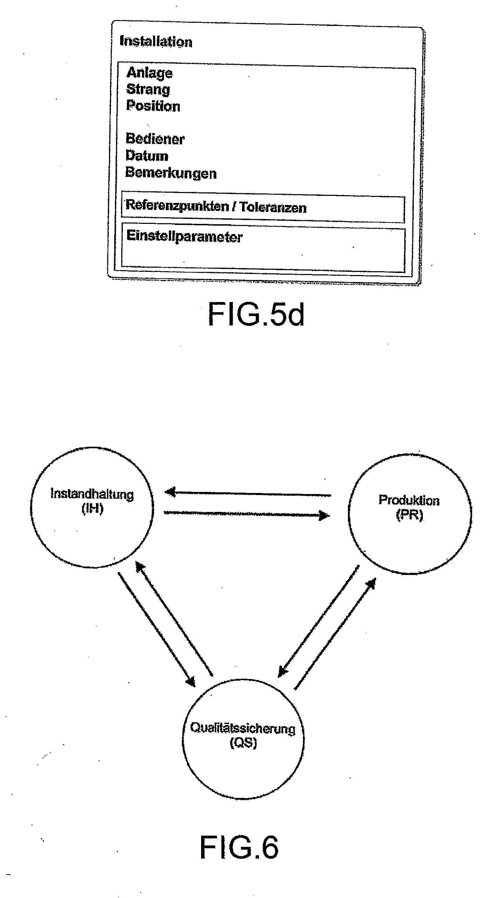

Die Figuren 5a - 5d zeigen unterschiedliche Datenstrukturen eines virtuellen Zustands 8. In Fig. 5a sind beispielhafte Daten zu einem Segment aus einer Strangführung 14 als Aggregat (Werkzeug) 3 dargestellt. Fig. 5b zeigt die durch ein Messgerät (Roll-Gap-Checker) 15 erzeugten Daten. In Fig. 5c sind die Daten aus zugehörigen Wartungen in einer Werkstatt dargestellt und Fig. 5d zeigt Daten zu einer Installation eines Aggregats 3 in einem Betriebsbereich 2. Die verschiedenen Datenstrukturen aus den Fig. 5a - 5d werden in den virtuellen Zuständen 8 der Aggregate 3 einer Anlage 1 der Hüttenindustrie gespeichert und bei dem Betrieb der Anlage 1 der Hüttenindustrie ausgewertet und berücksichtigt.

Fig. 6 zeigt eine schematische Nutzung der Erfindung bei der Produktion, Instandhaltung und Qualitätssicherung in einer Anlage 1 der Hüttenindustrie. Die Anlage 1 der Hüttenindustrie umfasst beispielsweise die Bereiche Produktion, Instandhaltung und Qualitätssicherung. Die Produktion umfasst dabei beispielsweise die Betriebsbereiche 2 Stranggießmaschine und Gießbühne, die Instandhaltung die Betriebsbereiche 2 Segmentwerkstatt und zentrale Werkstatt und die Qualitätssicherung die Betriebsbereiche Brammenlager und Qualitätssicherungs (QS) -Labor. Der Transport von Aggregaten 3 zwischen den Bereichen wird beispielsweise durch einen oder mehrere als "Transport" bezeichneten Betriebsbereichen abgebildet.

Die einzelnen Bereiche Produktion, Instandhaltung und Qualitätssicherung, insbesondere deren Betriebsbereiche 2 sind zur Kommunikation untereinander ausgebildet, beispielsweise mittels eine zuvor beschriebenen übergeordneten Kommunikationsnetzwerk 10. Die Bereiche können somit Informationen untereinander austauschen, beispielsweise über Produktionsereignisse (insbesondere in Echtzeit), aktuelle Zustände bzw. Echtzeitinformationen über Zustandsbewertungen von Maschinenteilen wie Werkzeugen (Segmentrollen) und/oder Informationen über die Qualität von hergestellten Produkten (z.B. Brammen). Dies ermöglicht beispielsweise eine Prozessverriegelung und/oder Rückverfolgung (Traceability) wie nachfolgend anhand von Szenarien näher erläutert wird. Durch einen Echtzeit-Datenfluss werden Wechselwirkungen zwischen diesen Bereichen realisiert und eine ganzheitliche Beurteilung in allen drei Bereichen zeitgleich ermöglicht.

Zur Absicherung der Produktqualität können ferner Prozesssimulationen herangezogen werden, welche basierend auf einem festgestellten Zustand eines Aggregats 3 sowie in dem betreffenden Produktionszeitraum erfassten Produktionsereignissen beurteilen, ob alle geforderten Prozessbedingungen eingehalten wurden.

Im folgenden ersten Szenario wurde vom Maschinenpersonal ein Fehler während einer Inspektion der Produktionsanlage entdeckt, beispielsweise ein defektes Aggregat 3. Dies führt zu einer Verriegelung des Produktionsprozesses und es wird eine Meldung an die Instandhaltung bezüglich des defekten Aggregats 3 abgesetzt, wie beispielsweise "Werkzeug nicht mehr einsetzen bzw. nicht mehr aufbereiten (säubern, feineinstellen), sondern mechanisch bearbeiten oder Überführung zur Verschrottung". Ferner kann eine Mitteilung an die Qualitätssicherung erfolgen, um Produkte zu identifizieren, welche mit dem defekten Aggregat 3 hergestellt wurden. Diese identifizierten Produkte können auf Produktionsfehler geprüft werden, bevor diese zur Weiterverarbeitung freigegeben werden.

Im folgenden zweiten Szenario wurde vom QS-Personal ein Fehler bei einer Qualitätskontrolle entdeckt. Die Qualitätssicherung informiert daraufhin die Produktion, dass das Halbzeug mit dem entdeckten Fehler nicht weiterverarbeitet wird. Ferner kann die Produktion angewiesen werden, vergleichbare Produkte mit entsprechenden Qualitätsanforderungen nicht mehr hergestellt werden können und Aggregate 3 aus Betriebsbereichen 2 der Produktion instandgesetzt werden müssen, um Produkte mit den Qualitätsanforderungen herstellen zu können. Wenn ein defektes Aggregat 3 identifiziert werden konnte, können über die Qualitätssicherung bereits mit diesem Aggregat 3 hergestellte Produkte ausfindig gemacht werden und auf entsprechende Qualitätsfehler geprüft werden.

Dies sind nur zwei Szenarien für einen Einsatz der Erfindung.

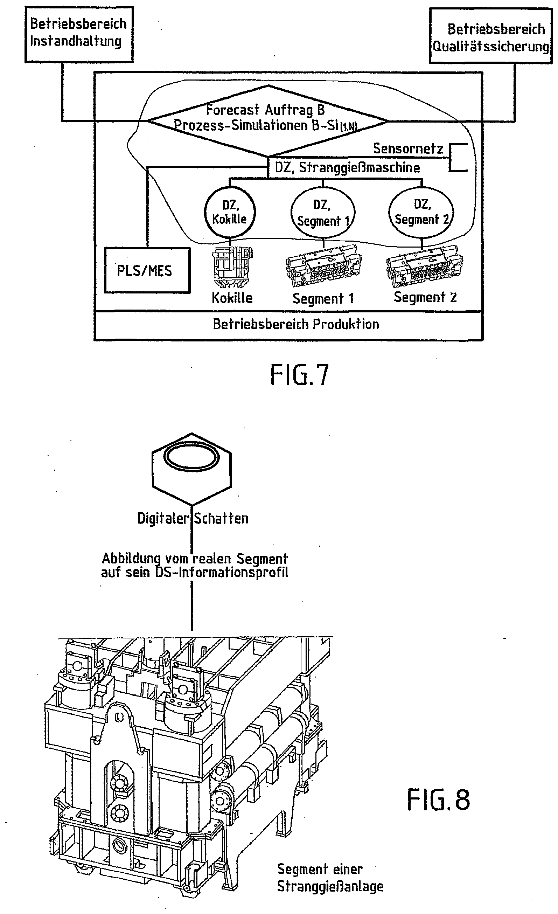

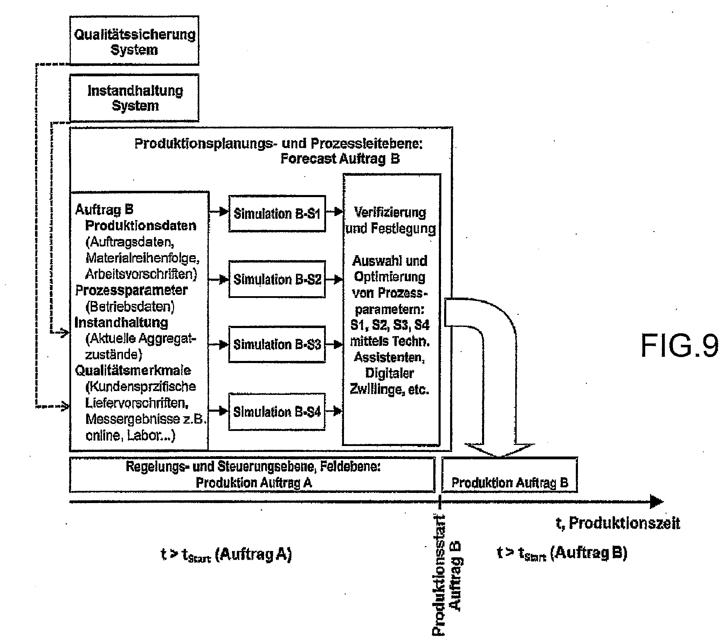

Fig. 7 zeigt weitere Details zu der Produktion aus Fig. 6. Die Produktion umfasst beispielsweise eine Stranggießmaschine mit drei Aggregaten 3, bezeichnet als Kokille, Segment 1 und Segment 2. Die digitalen Schatten der Aggregate 3 sind dabei mit den DZ Kokille, DZ Segment 1 bzw. DZ Segment 2 bezeichnet, woraus sich ein digitaler Schatten der Stranggießmaschine (DZ Stranggießmaschine) ableiten lässt. Aus den genannten digitalen Schatten lässt sich zusammen mit Daten aus einem Prozessleitsystem (PLS), einem sogenannten Manufacturing Execution System (MES) und den Bereichen Instandhaltung und Qualitätssicherung eine Produktion eines zukünftigen Produkts gemäß Auftrag B optimieren, wie nachfolgend unter Verweis auf Fig. 9 näher beschrieben. Fig. 8 zeigt eine Detailansicht von Fig. 7 in Verbindung mit den digitalen Schatten.

Die Nutzung einer erfindungsgemäßen Anlage 1 der Hüttenindustrie gemäß Fig. 9 realisiert eine Cyber-physisches Produktionssystem, welches eine weitere Vertiefung der Produktionsplanung ermöglicht, inklusive Simulation verschiedener Produktionsereignisse unter Berücksichtigung aktueller Aggregatzustände, sowie erzielter Produktqualitäten, unmittelbarer Kontrolle der Produktion unter Echtzeit und/oder Aufgabenweiterleitung an produzierende Aggregate.

Für die im nächsten Produktionsschritt zu gießende Stahlgüte (Auftrag B, Fig. 8) werden die aktuellen Aggregatzustände sowie vorherige Untersuchungsergebnisse bezüglich der Produktqualität bereits gegossener Produkte erfasst und zusammen mit den vordefinierten Prozessbedingungen zusammengeführt. Verschiedene Prozesssimulationen durch das Variieren von bestmöglichen Werten für Prozessparameter werden gestartet. Technologische Assistenten verifizieren aus der Analyse der Berechnungsergebnissen der durchgelaufenen Simulationen optimale Werte (Faktoren) für die Produktion bezüglich der Prozessparameter und Eistellungen der Aggregate 3 und legen diese fest (siehe Fig. 8). Im nächsten Verfahrensschritt werden zum einen die ausgewählten Werte mittels der Digitalen Schatten an die Aggregate 3 und an das Prozessleitsystem (PLS) übergeben, zum anderen werden die Auskünfte über Erwartungen der Produktqualität an den Qualitätssicherung-Betriebsbereich übergeben. Anhand der Bedienerschnittstelle der technologischen Assistenten kann der Operator der Anlage 1 eigene Werte für die Simulationsparameter (z.B. eine andere Gießgeschwindigkeit) festlegen, um eine Aussage über die erreichbare Qualität und Produktionszeit, -menge zu bekommen.

### Bezugszeichenliste

- 1: Anlage der Hüttenindustrie
- 2: Betriebsbereiche
- 3: Aggregat
- 4: Einheit zum Senden, Empfangen und Speichern
- 5: Kommunikationsmittel
- 6: Sensornetz
- 7: virtueller Raum
- 8: virtueller Zustand
- 9: Leitstand
- 10: übergeordnetes Netzwerk
- 11: mobiles Endgerät
- 12: Cloud
- 13: Kokille
- 14: Segment der Strangführung
- 15: Messgerät (Roll-Gap-Checker)
- 16: Benutzer
- 17: Aggregatnetzwerk

## Patentansprüche

1. Anlage (1) der Hüttenindustrie mit
einer Mehrzahl von Betriebsbereichen (2),
mindestens einem beweglichen Aggregat (3) mit einer Einheit (4) zum Senden, Empfangen und Speichern von dem Aggregat (3) zugeordneten Daten, und
einen Leitstand (9) zur Steuerung oder Prozessführung der Anlage (1) der Hüttenindustrie wobei die Betriebsbereiche (2) jeweils mindestens ein Kommunikationsmittel (5) zur Kommunikation mit der Einheit (4) des Aggregats (3) umfassen,
**dadurch gekennzeichnet,**
**dass** die Betriebsbereiche (2) jeweils mindestens ein Sensornetz (6) zur Erfassung von in dem Betriebsbereich (2) befindlichen Aggregaten (3) umfassen,
**dass** die dem Aggregat (3) zugeordneten Daten einen virtuellen Zustand (8) des Aggregats (3) abbilden, wobei der Zustand des Aggregats (3) die Temperatur, den Verschleiß, den Verschmutzungsgrad, Kalkablagerungen, die Wartungshistorie, Kalibrierungsparameter, Verwendungshistorie, Restlebensdauer, erwartete Lebensdauer bis zur nächsten Wartung, aktuelle Position, alte oder neue Einbauposition oder jegliche andere Eigenschaft des Aggregats (3), welche durch den Einsatz oder die Bearbeitung des Aggregats (3) in der Anlage (1) der Hüttenindustrie beeinflusst wird betrifft,
**dass** die Betriebsbereiche (2) als virtuelle Räume (7) abgebildet sind, welche der virtuellen Zustand (8) des in dem virtuellen Raum (7) befindlichen Aggregats (3) hinsichtlich der Nutzung des Aggregats (3) in dem Betriebsbereich (2) anpassen, wobei die virtuellen Räume (7) die Nutzung des Aggregats (3) in dem physikalischen Betriebsbereich (2) beschreiben, und
**dass** der Leitstand (9) bei der Steuerung oder Prozessführung der Anlage (1) der Hüttenindustrie die in den Einheiten (4) der Aggregate (3) gespeicherten Daten zu dem virtuellen Zustand (8) der Aggregate (3) hinsichtlich einer aktuellen und/oder zukünftigen Nutzung der Aggregate (3) berücksichtigt.

2. Anlage (1) der Hüttenindustrie nach Anspruch 1,
weiterhin umfassend mindestens ein mobiles Endgerät (11), insbesondere für einen Benutzer (16), zur Kommunikation mit der Einheit (4) des Aggregats (3) und/oder den Kommunikationsmitteln (5) des Betriebsbereichs (2).

3. Anlage (1) der Hüttenindustrie nach einem der Ansprüche 1 bis 2,
wobei das Aggregat (3) mindestens ein Wechselteil umfasst, welches mit einer separaten Einheit (4) zum Senden, Empfangen und Speichern von dem Wechselteil zugeordneten Daten ausgestattet ist, wobei die Kommunikationsmittel (5) und das Sensornetz (6) der Betriebsbereiche (2) zur Kommunikation mit der Einheit (4) des Wechselteils und/oder der Erfassung des Wechselteils ausgebildet sind.

4. Anlage (1) der Hüttenindustrie nach Anspruch 3,
wobei das Aggregat (3) ein Aggregatnetzwerk bereitstellt, zur Kommunikation mit den Wechselteilen des Aggregats, wobei das Aggregatnetzwerk die Funktionen eines Sensornetzwerks zur Erkennung von Einheiten (4) der dem Aggregat (3) zugeordneten Wechselteile und/oder die Funktionen eines Kommunikationsnetzwerks zur Kommunikation mit der Einheit (4) der dem Aggregat (3) zugeordneten Wechselteile umfasst.

5. Anlage (1) der Hüttenindustrie nach einem der Ansprüche 1 bis 4,
weiterhin umfassend ein übergeordnetes Sensornetzwerk, welches die einzelnen Sensornetze (6) der Betriebsbereiche (2) miteinander vernetzt.

6. Anlage (1) der Hüttenindustrie nach einem der Ansprüche 1 bis 5,
weiterhin umfassend ein übergeordnetes Kommunikationsnetzwerk, welches die einzelnen Kommunikationsmittel (5) der Betriebsbereiche (2) miteinander vernetzt.

7. Anlage (1) der Hüttenindustrie nach einem der Ansprüche 1 bis 6,
wobei die Kommunikationsmittel (5) und das Sensornetz (6) der Betriebsbereiche (2) integral miteinander ausgebildet sind, insbesondere durch Verwendung von intelligenten Sensoren oder Hot-Spots.

8. Anlage (1) der Hüttenindustrie nach einem der Ansprüche 1 bis 7,
weiterhin umfassend ein übergeordnetes Netzwerk (10) zur Kommunikation mit den Kommunikationsmitteln (5) und/oder Sensornetzen (6) der Betriebsbereiche (2) und ggf. mit dem mobilen Endgerät (11) des Benutzers (16), dem Leitstand (9) der Anlage (1) oder dergleichen.

9. Anlage (1) der Hüttenindustrie nach Anspruch 8,
wobei das übergeordnete Netzwerk (10) die Kommunikationsmittel (5) und/oder Sensornetze (6) der Betriebsbereiche (2) organisiert, kontrolliert und/oder überwacht und insbesondere zur Aktivierung und/oder Deaktivierung von einzelnen Kommunikationsmitteln (5) und/oder Sensornetzen (6) der Betriebsbereiche (2) ausgebildet ist.

10. Anlage (1) der Hüttenindustrie nach einem der Ansprüche 1 bis 9,
weiterhin umfassend Aktoren in den Betriebsbereichen (2), welche eine Kommunikation zwischen den Kommunikationsmitteln (5) der Betriebsbereiche (2) und der Einheit (4) zum Senden, Empfangen und Speichern von dem Aggregat (3) und/oder Wechselteil zugeordneten Daten veranlassen.

11. Anlage (1) der Hüttenindustrie nach einem der Ansprüche 1 bis 10,
wobei die Einheit (4) zum Senden, Empfangen und Speichern von dem Aggregat (3) und/oder Wechselteil zugeordneten Daten als Smart-Label ausgebildet ist, wobei das Smart-Label eine Datenverarbeitungseinrichtung mit digitalem Objektgedächtnis zur Speicherung von Daten umfasst.

12. Anlage (1) der Hüttenindustrie nach einem der Ansprüche 1 bis 11,
wobei wenigstens einer der Betriebsbereiche (2) ein Messsensornetz mit einem oder mehreren Messsensoren zur Erfassung von Prozesszuständen, Maschinenzuständen und/oder Betriebszuständen umfasst.

13. Anlage (1) der Hüttenindustrie nach einem der Ansprüche 1 bis 12,
wobei wenigstens einer der Betriebsbereiche (2) eine Auswerteeinheit und/oder eine Analyseeinheit umfasst, wobei die Auswerteeinheit den virtuellen Zustand (8) eines Aggregats (3) hinsichtlich einer Nutzung des Aggregats (3) in dem Betriebsbereich (2) und/oder von Auswirkungen auf andere Betriebsbereiche (2) auswertet, und wobei die Analyseeinheit den Einfluss des virtuellen Zustands (8) des Aggregats (3) auf das Betriebsergebnis des Betriebsbereichs (2) und/oder der Anlage (1) der Hüttenindustrie analysiert.

14. Verfahren zum Betreiben einer Anlage (1) der Hüttenindustrie nach einem der Ansprüche 1 bis 13, umfassend die Schritte:
Zuordnen von virtuellen Zuständen (8) zu Aggregaten (3) in der Anlage (1) der Hüttenindustrie, wobei der Zustand des Aggregats (3) die Temperatur, den Verschleiß, den Verschmutzungsgrad, Kalkablagerungen, die Wartungshistorie, Kalibrierungsparameter, Verwendungshistorie, Restlebensdauer, erwartete Lebensdauer bis zur nächsten Wartung, aktuelle Position, alte/neue Einbauposition oder jegliche andere Eigenschaft des Aggregats (3), welche durch den Einsatz oder die Bearbeitung des Aggregats (3) in der Anlage der Hüttenindustrie beeinflusst wird betrifft,
Zuordnen von virtuellen Räumen (7) zu Betriebsbereichen (2) der Anlage (1) der Hüttenindustrie, wobei die virtuellen Räume (7) die virtuellen Zustände (8) der in dem zugehörigen Betriebsbereich (2) befindlichen Aggregate (3) hinsichtlich der Nutzung der Aggregate (3) in dem Betriebsbereich (2) anpassen, wobei die virtuellen Räume (7) die Nutzung des Aggregats (3) in dem physikalischen Betriebsbereich (2) beschreiben,
Erfassen von Aufenthalten von Aggregaten (3) in Betriebsbereichen (2) der Anlage (1) der Hüttenindustrie,
Anpassen der virtuellen Zustände (8) der Aggregate (3) durch Aufenthalte in Betriebsbereichen (2) der Anlage (1) der Hüttenindustrie mittels der zugehörigen virtuellen Räume (7), und
Steuern der Anlage (1) der Hüttenindustrie unter Berücksichtigung der virtuellen Zustände (8) der Aggregate (3) hinsichtlich einer aktuellen und/oder zukünftigen Nutzung der Aggregate (3).

15. Verfahren nach Anspruch 14
wobei die Historie der Aufenthalte der Aggregate (3) in Betriebsbereichen (2) der Anlage (1) der Hüttenindustrie in Form der virtuellen Zustände (8) gespeichert wird.

16. Verfahren nach einem der Ansprüche 14 bis 15,
umfassend den Schritt des Auslesens und/oder Anpassens der virtuellen Zustände (8) der Aggregate (3) durch einen Benutzer (16).

17. Verfahren nach einem der Ansprüche 14 bis 16,
umfassend den Schritt einer Zustandskontrolle, Diagnose und/oder Prognose der Aggregate (3).

18. Verfahren nach einem der Ansprüche 14 bis 17,
weiterhin umfassend die folgenden Schritte:
Zuordnen von virtuellen Zuständen (8) zu Wechselteilen von Aggregaten (3),
Erfassen von Aufenthalten von Aggregaten (3) mit deren Wechselteilen in Betriebsbereichen (2) der Anlage (1) der Hüttenindustrie, und
Anpassen der virtuellen Zustände (8) der Wechselteile der Aggregate (3) durch Aufenthalte in Betriebsbereichen (2) der Anlage (1) der Hüttenindustrie mittels der zugehörigen virtuellen Räume (7).

19. Verfahren nach einem der Ansprüche 14 bis 18,
weiterhin umfassend den Schritt des Austauschs von Daten zwischen Betriebsbereichen (2) der Anlage (1), mobilen Endgeräten (11) von Benutzern (16) und/oder einem Leitstand (9) der Anlage (1) mittels eines übergeordneten Netzwerks (10), wobei der Austausch der Daten vorzugsweise autonom erfolgt, insbesondere durch einen autonomen Aufbau einer Kommunikation zwischen den Kommunikationspartnern.

20. Verfahren nach einem der Ansprüche 14 bis 19,
umfassend den Schritt des Überwachens der Zustände der Aggregate (3) und/oder Wechselteile.

## Claims

1. Plant (1) of the metallurgical industry, with
a plurality of operating regions (2),
at least one movable group (3) with a unit (4) for transmitting, receiving and storing data associated with the group (3), and
a control station (9) for control or process guidance of the plant (1) of the metallurgical industry,
wherein the operating regions (2) each comprise at least one communications means (5) for communication with the unit (4) of the group (3),
**characterised in that**
the operating regions (2) each comprise at least one sensor network (6) for detecting groups (3) present in the operating region (2),
the data associated with the group (3) reproduce a virtual state (8) of the group (3),
wherein the state of the group (3) relates to the temperature, the wear, the degree of contamination, lime deposits, maintenance history, calibration parameters, use history, remaining service life, expected service life to the next maintenance, current position, old or new installation position or any other characteristic of the group (3) which is influenced by the use or operation of the group (3) in the plant (1) of the metallurgical industry,
the operating regions (2) are shown as virtual spaces (7), which adapt the virtual state (8) of the group (3), which is present in the virtual space (7), with respect to the use of the group (3) in the operating region (2), wherein the virtual spaces (7) describe the use of the group (3) in the physical operating region (2),
the control station (9) in the control or process guidance of the plant (1) of the metallurgical industry takes into account the data, which are stored in the units (4) of the groups (3), concerning the virtual state (8) of the groups (3) with respect to a current and/or future use of the groups (3).

2. Plant (1) of the metallurgical industry according to claim 1,
further comprising at least one mobile terminal (11), particularly for a user (16), for communication with the unit (4) of the group (3) and/or the communications means (5) of the operating region (2).

3. Plant (1) of the metallurgical industry according to one of claims 1 and 2,
wherein the group (3) comprises at least one exchange part which is equipped with a separate unit (4) for transmitting, receiving and storing data associated with the exchange part, wherein the communications means (5) and the sensor network (6) of the operating regions (2) are configured for communication with the unit (4) of the exchange part and/or the detection of the exchange part.

4. Plant (1) of the metallurgical industry according to claim 3,
wherein the group (3) provides a group network for communication with the exchange parts of the group, wherein the group network comprises the functions of a sensor network for recognition of units (4) of the exchange parts associated with the group (3) and/or the functions of a communications network for communication with the unit (4) of the exchange parts associated with the group (3).

5. Plant (1) of the metallurgical industry according to any one of claims 1 to 4,
further comprising a superordinate sensor network which links the individual sensor networks (6) of the operating regions (2) together.

6. Plant (1) of the metallurgical industry according to any one of claims 1 to 5,
further comprising a superordinate communications network which links the individual communications means (5) of the operating regions (2) together.

7. Plant (1) of the metallurgical industry according to any one of claims 1 to 6,
wherein the communications means (5) and the sensor network (6) of the operating regions (2) are formed to be integral with one another, particularly through use of intelligent sensors or hot-spots.

8. Plant (1) of the metallurgical industry according to any one of claims 1 to 7,
further comprising a superordinate network (10) for communication with the communications means (6) and/or the sensor networks (6)of the operating regions (2) and optionally with the mobile terminal (11) of the user (16), the control station (9) of the plant (1) or the like.

9. Plant (1) of the metallurgical industry according to claim 8,
wherein the superordinate network (10) organises, controls and/or monitors the communications means (5) and/or sensor networks (6) of the operating regions (2) and in particular is configured for activating and/or deactivating individual communications means (5) and/or sensor networks (6) of the operating regions (2).

10. Plant (1) of the metallurgical industry according to any one of claims 1 to 9,
further comprising actuators in the operating regions (2) which instigate communication between the communications means (5) of the operating regions (2) and the unit (4) for transmitting, receiving and storing data associated with the group (3) and/or exchange part.

11. Plant (1) of the metallurgical industry according to any one of claims 1 to 10,
wherein the unit (4) for transmitting, receiving and storing data associated with the group (3) and/or exchange part is formed as a smart label, wherein the smart label comprises a data processing device with digital object memory for storage of data,

12. Plant (1) of the metallurgical industry according to any one of claims 1 to 11,
wherein at least one of the operating regions (2) comprises a measuring sensor network with one or more measuring sensors for detection of process states, machine states and/or operating states.

13. Plant (1) of the metallurgical industry according to any one of claims 1 to 12, wherein at least one of the operating regions (2) comprises an evaluating unit and/or an analysing unit, wherein the evaluating unit evaluates the virtual state (8) of a group (3) with respect to use of the group (3) in the operating region (2) and/or of effects on other operating regions (2), and wherein the analysing unit analyses the influence of the virtual state (8) of the group (3) on the operating result of the operating region (2) and/or the plant (1) of the metallurgical industry.

14. Method of operating a plant (1) of the metallurgical industry according to any one of claims 1 to 13, comprising the steps of:
assignment of virtual states (8) to groups (3) in the plant (1) of the metallurgical industry, wherein the state of the group (3) relates to the temperature, the wear, the degree of contamination, lime deposits, maintenance history, calibration parameters, use history, remaining service life, expected service life to the next maintenance, current position, old/new installation position or any other characteristic of the group (3) which is influenced by the use or operation of the group (3) in the plant (1) of the metallurgical industry,
assignment of virtual spaces (7) to operating regions (2) of the plant (1) of the metallurgical industry, wherein the virtual spaces (7) adapt the virtual states (8) of the groups (3), which are present in the associated operating region (2), with respect to the use of the groups (3) in the operating region (2), wherein the virtual spaces (7) describe the use of the group (3) in the physical operating region (2),
detection of stays of groups (3) in the operating regions (2) of the plant (1) of the metallurgical industry,
adaptation of the virtual states (8) of the groups (3) by stays in operating regions (2) of the plant (1) of the metallurgical industry by means of the associated virtual spaces (7), and
control of the plant (1) of the metallurgical industry with account taken of the virtual states (8) of the groups (3) with respect to a current and/or future use of the groups (3).

15. Method according to claim 14,
wherein the history of the stays of the groups (3) in operating regions (2) of the plant (1) of the metallurgical industry is stored in the form of the virtual states (8).

16. Method according to one of claims 14 and 15,
comprising the step of reading-out and/or adapting the virtual states (8) of the groups (3) by a user (16).

17. Method according to any one of claims 14 to 16,
comprising the step of state checking, diagnosis and/or prognosis of the groups (3).

18. Method according to any one of claims 14 to 17,
further comprising the following steps:
assignment of virtual states (8) to exchange parts of groups (3),
detection of stays of groups (3) with the exchange parts thereof in operating regions (2) of the plant (1) of the metallurgical industry, and
adaptation of the virtual states (8) of the exchange parts of the groups (3) through stays in operating regions (2) of the plant (1) of the metallurgical industry by means of the associated virtual spaces (7).

19. Method according to any one of claims 14 to 18,
further comprising the step of exchange of data between operating regions (2) of the plant (1), mobile terminals (11) of users (16) and/or a control station (9) of the plant (1) by means of a superordinate network (10), wherein the exchange of data preferably takes place autonomously, in particular by an autonomous build-up of a communication between the communications partners.

20. Method according to any one of claims 14 to 18,
comprising the step of monitoring the states of the groups (3) and/or exchange parts.

## Revendications

1. Installation (1) d'industrie métallurgique avec
une pluralité de zones de fonctionnement (2),
au moins un agrégat mobile (3) avec une unité (4) d'envoi, de réception et de stockage de données associées à l'agrégat (3), et
un poste de commande (9) pour le contrôle ou la gestion de processus de l'installation (1) de l'industrie métallurgique,
dans laquelle les zones de fonctionnement (2) comprennent chacune au moins un moyen de communication (5) pour communiquer avec l'unité (4) de l'agrégat (3),
**caractérisée en ce que** les zones de fonctionnement (2) comprennent chacune au moins un réseau de capteurs (6) pour détecter des agrégats (3) se trouvant dans la zone de fonctionnement (2),
**en ce que** les données associées à l'agrégat (3) représentent un état virtuel (8) de l'agrégat (3), l'état de l'agrégat (3) comprenant la température, l'usure, le degré d'encrassement, les dépôts de calcaire, l'historique de maintenance, les paramètres d'étalonnage, l'historique d'utilisation, la durée de vie restante, la durée de vie prévue jusqu'à la prochaine maintenance, la position actuelle, l'ancienne ou la nouvelle position de montage ou toute autre caractéristique de l'agrégat (3) qui est influencée par l'utilisation ou le traitement de l'agrégat (3) dans l'installation (1) de l'industrie métallurgique,
**en ce que** les zones de fonctionnement (2) sont représentées sous forme d'espaces virtuels (7) qui adaptent l'état virtuel (8) de l'agrégat (3) se trouvant dans l'espace virtuel (7) en ce qui concerne l'utilisation de l'agrégat (3) dans la zone de fonctionnement (2), les espaces virtuels (7) décrivant l'utilisation de l'agrégat (3) dans la zone de fonctionnement physique (2), et
**en ce que** le poste de commande (9) tient compte, lors du contrôle ou de la conduite du processus de l'installation (1) de l'industrie métallurgique, des données enregistrées dans les unités (4) des agrégats (3) concernant l'état virtuel (8) des agrégats (3) en ce qui concerne une utilisation actuelle et/ou future des agrégats (3).

2. Installation (1) d'industrie métallurgique selon la revendication 1,
comprenant en outre au moins un terminal mobile (11), notamment pour un utilisateur (16), pour assurer la communication avec l'unité (4) de l'agrégat (3) et/ou les moyens de communication (5) de la zone de fonctionnement (2).

3. Installation (1) d'industrie métallurgique selon l'une des revendications 1 à 2,
dans laquelle l'agrégat (3) comprend au moins une partie interchangeable qui est équipée d'une unité séparée (4) pour l'envoi, la réception et le stockage de données associées à la partie interchangeable, les moyens de communication (5) et le réseau de capteurs (6) des zones de fonctionnement (2) étant conçus pour communiquer avec l'unité (4) de la partie interchangeable et/ou pour détecter la partie interchangeable.

4. Installation (1) d'industrie métallurgique selon la revendication 3,
dans laquelle l'agrégat (3) fournit un réseau d'agrégats pour assurer la communication avec les parties interchangeables de l'agrégat, le réseau d'agrégats comprenant les fonctions d'un réseau de capteurs pour détecter les unités (4) des parties interchangeables associées à l'agrégat (3) et/ou les fonctions d'un réseau de communication pour assurer la communication avec l'unité (4) des parties interchangeables associées à l'agrégat (3).

5. Installation (1) d'industrie métallurgique selon l'une des revendications 1 à 4,
comprenant en outre un réseau de capteurs supérieur, qui met en réseau les différents réseaux de capteurs (6) des zones de fonctionnement (2).

6. Installation (1) d'industrie métallurgique selon l'une des revendications 1 à 5,
comprenant en outre un réseau de communication supérieur, qui met en réseau les différents moyens de communication (5) des zones de fonctionnement (2).

7. Installation (1) d'industrie métallurgique selon l'une des revendications 1 à 6,
dans laquelle les moyens de communication (5) et le réseau de capteurs (6) des zones de fonctionnement (2) sont conçus de manière intégrale les uns par rapport aux autres, notamment en utilisant des capteurs intelligents ou des points chauds.

8. Installation (1) d'industrie métallurgique selon l'une des revendications 1 à 7,
comprenant en outre un réseau supérieur (10) pour la communication avec les moyens de communication (5) et/ou les réseaux de capteurs (6) des zones de fonctionnement (2) et, le cas échéant, avec le terminal mobile (11) de l'utilisateur (16), le poste de commande (9) de l'installation (1) ou similaire.

9. Installation (1) d'industrie métallurgique selon la revendication 8,
dans laquelle le réseau supérieur (10) organise, contrôle et/ou surveille les moyens de communication (5) et/ou les réseaux de capteurs (6) des zones de fonctionnement (2), étant notamment conçu pour activer et/ou désactiver des moyens de communication (5) et/ou des réseaux de capteurs (6) individuels des zones de fonctionnement (2).

10. Installation (1) d'industrie métallurgique selon l'une des revendications 1 à 9,
comprenant en outre des actionneurs dans les zones de fonctionnement (2), qui initient une communication entre les moyens de communication (5) des zones de fonctionnement (2) et l'unité (4) d'envoi, de réception et de stockage de données associées à l'agrégat (3) et/ou à la partie interchangeable.

11. Installation (1) d'industrie métallurgique selon l'une des revendications 1 à 10,
dans laquelle l'unité (4) d'envoi, de réception et de stockage de données associées à l'agrégat (3) et/ou à la partie interchangeable est conçue comme une étiquette intelligente, l'étiquette intelligente comprenant un dispositif de traitement de données doté d'une mémoire d'objets numériques pour le stockage des données.

12. Installation (1) d'industrie métallurgique selon l'une des revendications 1 à 11,
dans laquelle au moins une des zones de fonctionnement (2) comprend un réseau de capteurs de mesure avec un ou plusieurs capteurs de mesure pour la détection d'états de processus, d'états de machines et/ou d'états de fonctionnement.

13. Installation (1) d'industrie métallurgique selon l'une des revendications 1 à 12,
dans laquelle au moins une des zones de fonctionnement (2) comprend une unité d'évaluation et/ou une unité d'analyse, dans laquelle l'unité d'évaluation évalue l'état virtuel (8) d'un agrégat (3) en ce qui concerne une utilisation de l'agrégat (3) dans la zone de fonctionnement (2) et/ou les effets sur d'autres zones de fonctionnement (2), l'unité d'analyse analysant l'influence de l'état virtuel (8) de l'agrégat (3) sur le résultat d'exploitation de la zone de fonctionnement (2) et/ou de l'installation (1) de l'industrie métallurgique.

14. Procédé d'exploitation d'une installation (1) d'industrie métallurgique selon l'une des revendications 1 à 13, comprenant les étapes suivantes :
attribution d'états virtuels (8) à des agrégats (3) dans l'installation (1) de l'industrie métallurgique, l'état de l'agrégat (3) comprenant la température, l'usure, le degré d'encrassement, les dépôts de calcaire, l'historique de maintenance, les paramètres d'étalonnage, l'historique d'utilisation, la durée de vie restante, la durée de vie prévue jusqu'à la prochaine maintenance, la position actuelle, l'ancienne ou la nouvelle position de montage ou toute autre caractéristique de l'agrégat (3) qui est influencée par l'utilisation ou le traitement de l'agrégat (3) dans l'installation (1) de l'industrie métallurgique,
attribution d'états virtuels (7) à des zones de fonctionnement (2) de l'installation (1) de l'industrie métallurgique, les espaces virtuels (7) adaptant les états virtuels (8) des agrégats (3) se trouvant dans la zone de fonctionnement (2) correspondante en ce qui concerne l'utilisation des agrégats (3) dans la zone de fonctionnement (2), les espaces virtuels (7) décrivant l'utilisation de l'agrégat (3) dans la zone de fonctionnement physique (2),
enregistrement des séjours d'agrégats (3) dans les zones de fonctionnement (2) de l'installation (1) de l'industrie métallurgique,
adaptation des états virtuels (8) des agrégats (3) par des séjours dans des zones de fonctionnement (2) de l'installation (1) de l'industrie métallurgique au moyen des espaces virtuels (7) correspondants, et
commande de l'installation (1) de l'industrie métallurgique en tenant compte des états virtuels (8) des agrégats (3) en vue d'une utilisation actuelle et/ou future des agrégats (3).

15. Procédé selon la revendication 14
dans lequel l'historique des séjours des agrégats (3) dans des zones de fonctionnement (2) de l'installation (1) de l'industrie métallurgique est stocké sous la forme des états virtuels (8).

16. Procédé selon l'une des revendications 14 à 15, comprenant l'étape de lecture et/ou d'adaptation des états virtuels (8) des agrégats (3) par un utilisateur (16).

17. Procédé selon l'une des revendications 14 à 16, comprenant l'étape de contrôle d'état, de diagnostic et/ou de pronostic des agrégats (3).

18. Procédé selon l'une quelconque des revendications 14 à 17, comprenant en outre les étapes suivantes :
attribution d'états virtuels (8) à des parties interchangeables d'agrégats (3),
détection de séjours d'agrégats (3) avec leurs parties interchangeables dans des zones de fonctionnement (2) de l'installation (1) de l'industrie métallurgique, et
adaptation des états virtuels (8) des parties interchangeables des agrégats (3) par des séjours dans des zones de fonctionnement (2) de l'installation (1) de l'industrie métallurgique au moyen des espaces virtuels (7) associés.

19. Procédé selon l'une des revendications 14 à 18,
comprenant en outre l'étape d'échange de données entre des zones de fonctionnement (2) de l'installation (1), des terminaux mobiles (11) d'utilisateurs (16) et/ou un poste de commande (9) de l'installation (1) au moyen d'un réseau supérieur (10), l'échange des données s'effectuant de préférence de manière autonome, notamment en établissant de manière autonome une communication entre les partenaires de communication.

20. Procédé selon l'une quelconque des revendications 14 à 19, comprenant l'étape consistant à surveiller les états des agrégats (3) et/ou des pièces interchangeables.
